# EUROPEAN PATENT SPECIFICATION

(11) **EP 0 783 640 B1**
(45) Date of publication and mention of the grant of the patent: **02.08.2000**
(21) Application number: 95918201.5
(22) Date of filing: 06.05.1995
(51) Int. Cl.: F16H 61/02, F16H 61/16, B60K 41/10, F16H 61/18

(54) **AUTOMATIC TRANSMISSION SYSTEM FOR AUTOMOTIVE VEHICLE**
AUTOMATISCHES GETRIEBE FÜR EIN KRAFTFAHRZEUG
SYSTEME DE TRANSMISSION AUTOMATIQUE POUR VEHICULE AUTOMOTEUR

(43) Date of publication of application: 16.07.1997
(73) Proprietor: HYUNDAI MOTOR COMPANY, Jongro-ku, Seoul 110-270 (KR)
(72) Inventor: PARK, Jong, Sul, Seoul 134-030 (KR)
(74) Representative: Urner, Peter, Dipl.-Phys.
(86) International application number: PCT/KR95/00049
(87) International publication number: WO 96/35065

(56) References cited:
- WO-A-94/15809
- WO-A-95/00353
- WO-A-95/00778
- DE-A- 4 300 954
- US-A- 4 776 240

## Description

### BACKGROUND OF THE INVENTION

### Field of the Invention

This invention relates to an automatic transmission system for automotive vehicle and, more particularly, to an automatic transmission system wherein four solenoid valves are adopted to control shift valves such that a construction of the system can be simplified and shift feeling can be improved.

### Description of the Conventional Art

A conventional automatic transmission for an automotive vehicle has a torque converter and a multiple stage transmission gear mechanism connected to the torque converter. The torque converter includes hydraulically activated friction elements for selecting one of gear stages of a transmission gear mechanism according to vehicles operating condition.

A hydraulic control system pressurized by a hydraulic pump provides the hydraulic pressure required to operate the friction elements and control valves.

A commonly used automatic transmission of a vehicle has a hydraulic torque converter which generally includes a pump impeller connected with an engine output shaft to be driven thereby, a turbine runner with an output shaft member, and a stator disposed between the pump impeller and the turbine runner, so that the fluid is circulated by the engine driven pump impeller through the turbine runner with the aid of the stator which functions to deflect the fluid from the turbine runner to a direction where the fluid flow does not disturb the rotation of the pump impeller when the fluid flows into the pump impeller.

Automatic shifting is performed by operating the friction elements such as clutches or a kick-down brake at each shifting stage.

Also, a manual valve of which ports are converted by selecting a position of a selector lever, is designed to be supplied with fluid from the hydraulic pump and to supply the fluid to a shift control valve.

U.S. Patent No. 3,754,482 discloses one of the automatic transmissions described above having first and second shifting devices, wherein two friction elements among four friction elements are activated, selectively, to perform several speed stages.

Because known automatic transmission systems of the kind explained above can perform four forward speed stages and one reverse speed stage only, it is difficult to improve power transmission efficiency; and, because the systems cannot perform a skip shifting, it exhibit a slow responsiveness.

These conventional automatic transmission systems have a complicated valve body construction and, thus, the valve body is expensive and difficult to manufacture because there are many valves in the systems. Also, shift feeling when shifting a speed stage is not good.

A known automatic transmission (WO 95/00787) for an automotive vehicle comprises a hydraulic control part having a manual valve provided with a line pressure generated by an oil pump and regulated by a regulator valve; a solenoid supply valve for supplying oil pressure to a solenoid valve for controlling a reverse clutch inhibiter valve; a second speed clutch valve; a third speed clutch valve; and a fourth speed band valve for supplying hydraulic pressure to respective once of a plurality of friction elements. For controlling pressure supply to the second speed clutch valve, the third speed clutch valve and the fourth speed band valve respective solenoid valves are provided. In addition, for controlling the pressure in a pressure chamber of the pressure regulator valve another solenoid valve is provided that is duty controlled.

Further, an automatic transmission for an automotive vehicle as described in the preamble of claim 1 is known from WO 95/00353.

### SUMMARY OF THE INVENTION

An object of the invention is to provide an automatic transmission system which can perform five forward speeds and on reverse speed and can perform skip shifting such that shifting responsiveness can be improved. Another object of the invention is to provide an automatic transmission system the construction of which can be simplified and shift feeling can be improved.

These and other objects are accomplished by the automatic transmission according to claim 1.

According to the present invention four solenoid valves are respectively adopted to control four shift valves so that control can be performed sequentially so as to simplify the construction of the system and to improve the shift feeling.

Also, the present invention provides the automatic transmission system wherein a reverse clutch inhibiter valve for keeping the vehicle from being driven rearward when a reverse range is selected at a driven range to obstruct supply of hydraulic pressure to the ninth friction element is disposed in a reverse pressure conduit through which hydraulic pressure is supplied to the eighth friction element to provide an emergency safety means.

Also, the present invention provides the automatic transmission system wherein the torque control regulator valve comprises a pressure chamber for receiving hydraulic pressure controlled by the sixth solenoid valve; a first spool for selectively obstructing the torque pressure supplied to the first-to-second shift valve; a second spool for which pressure in the pressure chamber is applied; a first elastic member for biasing the first spool; and a second elastic member disposed between the first spool and the second spool to support the first and second spools elastically, said second elastic member exerting an elastic force bigger than that of the first elastic member.

Also, the present invention provides the automatic transmission system wherein the first-to-second shift valve comprises first and second ports for receiving control pressure from the second-to-third shift valve; a third port for receiving the torque pressure from a torque pressure conduit; a fourth port for receiving the drive pressure from the second clutch valve; a fifth port for transmitting the torque pressure to the second-to-third shift valve; a sixth port for transmitting the torque pressure or the drive pressure to the second clutch valve selectively; and a spool for opening or closing the ports according to a variation of pressure in a pressure chamber controlled by the first solenoid valve.

Also, the present invention provides an automatic transmission system wherein the second-to-third shift valve comprises first and second ports connected to branch conduits of a control conduit;
a third port for receiving the torque pressure from the first-to-second shift valve; a fourth port for receiving drive pressure from the third clutch valve; a fifth port transmitting the torque pressure to the third-to-fourth shift valve; a sixth port for transmitting pressure to the third clutch valve; a seventh port for transmitting control pressure to the first-to-second shift valve; and a spool for opening or closing the ports according to a variation of pressure in a pressure chamber controlled by the second solenoid valve.

Also, the present invention provides the automatic transmission system wherein the third-to-fourth shift valve comprises first and second ports connected to branch conduits of the control conduit; a third port for receiving the torque pressure from the second-to-third shift valve; a fourth port for receiving drive pressure from the fourth band valve; a fifth port for transmitting the torque pressure to the fourth-to-fifth shift valve; a sixth port for transmitting pressure to the fourth band valve; a seventh port for transmitting control pressure to the fourth-to-fifth shift valve; and a spool for opening or closing the ports according to a variation of pressure in a pressure chamber controlled by the third solenoid valve.

Also, the present invention provides the automatic transmission system wherein the fourth-to-fifth shift valve comprises first and second ports connected to branch conduits of the control conduit; a third port for receiving the torque pressure from the third-to-fourth shift valve; a fourth port for receiving drive pressure from the over-drive unit valve; a fifth port for transmitting pressure to the over-drive unit valve; and a spool for opening or closing the ports according to a variation of pressure in a pressure chamber controlled by the fourth solenoid valve.

Also, the present invention provides an automatic transmission system wherein the manual valve has modes for "P", "R", "N", "D", "3", "2" and "L" ranges.

Also, the present invention provides an automatic transmission system wherein the manual valve can be shifted to the "D", "3", "2" and "L" ranges manually.

Also, the present invention provides an automatic transmission system wherein the drive pressure is supplied to the first and sixth friction elements directly at a first speed of the "D" range.

Also, the present invention provides an automatic transmission system wherein the first solenoid valve for controlling the first-to-second shift valve is controlled to an OFF state to supply the drive pressure to friction elements which are activated at a first speed stage and to a second friction element at a second speed of the "D" range.

Also, the present invention provides the automatic transmission system wherein the second solenoid valve for controlling the second-to-third shift valve is controlled to an OFF state to supply the drive pressure to friction elements which are activated at a second speed stage and to a third friction element at a third speed of the "D" range.

Also, the present invention provides an automatic transmission system wherein the third solenoid valve for controlling the third-to-fourth shift valve is controlled to an OFF state to supply the drive pressure to friction elements which are activated at a third speed stage and to a fourth friction element at a fourth speed of the "D" range.

Also, the present invention provides an automatic transmission system wherein the fourth solenoid valve for controlling the fourth-to-fifth shift valve is controlled to an OFF state to obstruct hydraulic pressure supplied to the sixth friction element and to supply the drive pressure to friction elements which are activated at a fourth speed stage and to a fifth friction element at a fifth speed of the "D" range.

Also, the present invention provides an automatic transmission system wherein the first and second solenoid valves for controlling the first-to-second and second-to-third shift valves, respectively, are controlled to OFF states and the third and fourth solenoid valves for controlling the third-to-fourth and fourth-to-fifth shift valves, respectively, are controlled to ON states to enable a third-to-fourth skip shifting at the "D" range.

Also, the present invention provides the automatic transmission system wherein the first solenoid valve for controlling the first-to-second shift valve is controlled to an OFF state and the second, third and fourth solenoid valves for controlling the second-to-third, third-to-fourth and fourth-to-fifth shift valves, respectively, are controlled to ON states to enable a second-to-fifth skip shifting at the "D" range.

Also, the present invention provides an automatic transmission system wherein the first and fourth solenoid valves for controlling the first-to-second and fourth-to-fifth shift valves, respectively, are controlled to OFF states and the second and third solenoid valves for controlling the second-to-third and third-to-fourth shift valves, respectively, are controlled to ON states to enable a second-to-fourth skip shifting at the "D" range.

Also, the present invention provides an automatic transmission system wherein the first, second, third and fourth solenoid valves for controlling the first-to-second, second-to-third, third-to-fourth and fourth-to-fifth shift valves, respectively, are controlled to ON states to enable a first-to-fifth skip shifting at the "D" range.

Also, the present invention provides an automatic transmission system wherein the first, second and third solenoid valves for controlling the first-to-second, second-to-third, and third-to-fourth shift valves, respectively, are controlled to ON states and the fourth solenoid valve for controlling the fourth-to-fifth shift valve is controlled to an OFF state to enable a first-to-fourth skip shifting at the "D" range.

Also, the present invention provides an automatic transmission system wherein the first and second solenoid valves for controlling the first-to-second and second-to-third shift valves, respectively, are controlled to ON states and the third and fourth solenoid valves for controlling the third-to-fourth and fourth-to-fifth shift valves, respectively, are controlled to OFF states to enable a first-to-third skip shifting at the "D" range.

Also, the present invention provides an automatic transmission system wherein the solenoid supply valve has a spool, an elastic member for biasing the spool to regulate hydraulic pressure supplied from the solenoid supply valve, and a screw for compressing or releasing the elastic member.

### BRIEF DESCRIPTION OF THE DRAWINGS

Fig. 1 is a schematic view of a hydraulic control system according to an embodiment of the invention at an "N" (neutral) range.

Fig. 2A is an enlarged view of a damper clutch control section of the hydraulic control system of Fig. 1.

Fig. 2B is an enlarged view of a torque pressure conversion section of the hydraulic control system of Fig. 1.

Fig. 2C is an enlarged view of a first shift control section of the hydraulic control system of Fig. 1.

Fig. 2D is an enlarged view of a second shift control section of the hydraulic control system of Fig. 1.

Fig. 3 is the hydraulic control system of Fig. 1 at a first speed of a "D" range.

Fig. 4 is the hydraulic control system of Fig. 1 at a first-to-second speed shifting of the "D" range.

Fig. 5 is the hydraulic control system of Fig. 1 at a second speed of the "D" range.

Fig. 6 is the hydraulic control system of Fig. 1 at a second-to-third speed shifting of the "D" range.

Fig. 7 is the hydraulic control system of Fig. 1 at a third speed of the "D" range.

Fig. 8 is the hydraulic control system of Fig. 1 at a third-to-fourth speed shifting of the "D" range.

Fig. 9 is the hydraulic control system of Fig. 1 at a fourth speed of the "D" range.

Fig. 10 is the hydraulic control system of Fig. 1 at a fourth-to-fifth speed shifting of the "D" range.

Fig. 11 is the hydraulic control system of Fig. 1 at a fifth speed of the "D" range.

Fig. 12 is the hydraulic control system of Fig. 1 at a third-to-fifth skip shifting of the "D" range.

Fig. 13 is the hydraulic control system of Fig. 1 at a second-to-fifth skip shifting.

Fig. 14 is the hydraulic control system of Fig. 1 at a second-to-fourth skip shifting.

Fig. 15 is the hydraulic control system of Fig. 1 at a first-to-fifth skip shifting.

Fig. 16 is the hydraulic control system of Fig. 1 at a first-to-fourth skip shifting.

Fig. 17 is the hydraulic control system of Fig. 1 at a first-to-third skip shifting.

Fig. 18 is the hydraulic control system of Fig. 1 at an "R" (reverse) range.

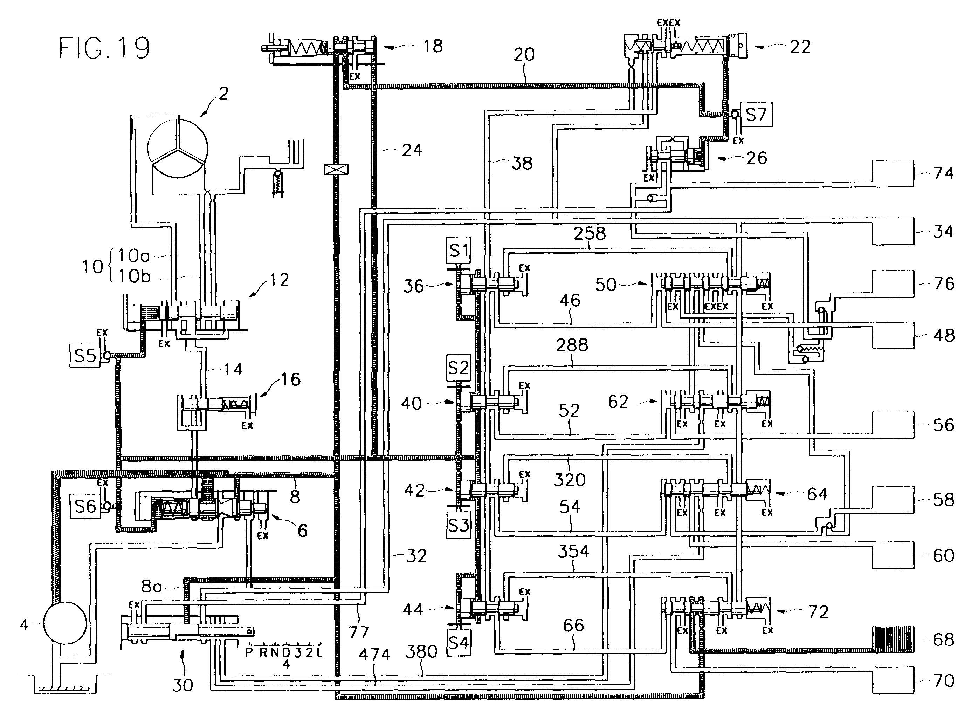

Fig. 19 is the hydraulic control system of Fig. 1 at a "P" (parking) range.

Fig. 20A is a table of friction elements and their operation for each speed stage.

Fig. 20B is a table of solenoid valves and their operation for each speed stage.

### DETAILED DESCRIPTION OF THE PREFERRED EMBODIMENT

Following are the description with reference to the attached drawings wherein same numbering systems are used to represent the same component parts.

In the figures, Ex demotes exhaust ports.

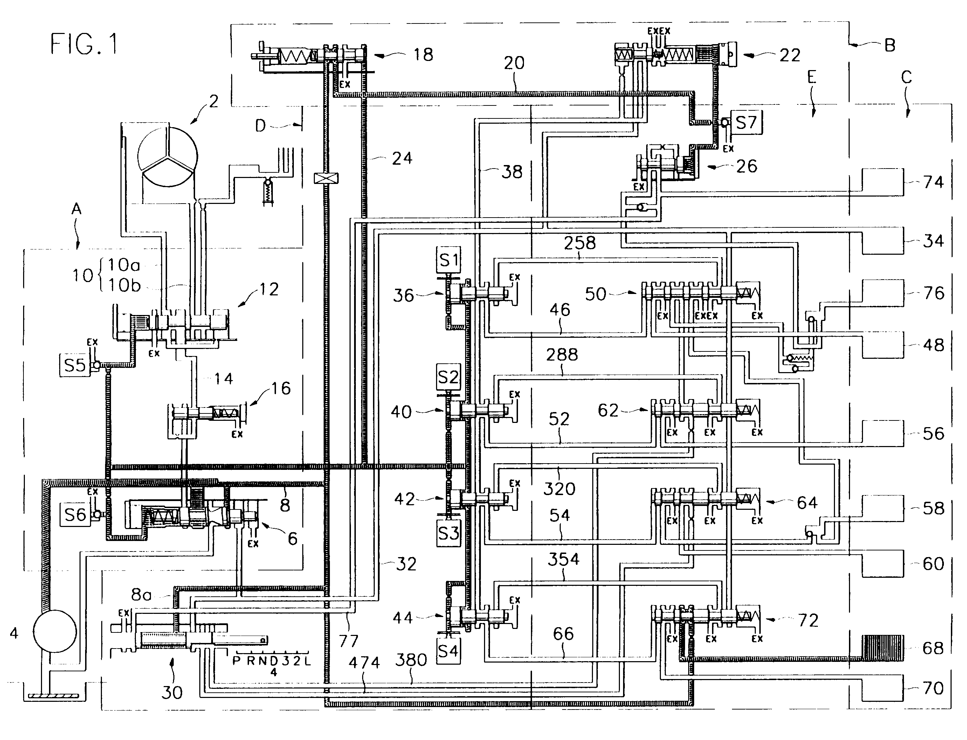

Referring to Fig. 1 illustrating a hydraulic control system according to an embodiment of the invention at an "N" (neutral) range, the hydraulic control system includes a torque converter 2 located between a crank shaft and a transmission for transmitting the engine power; a hydraulic pump 4 having a drive gear fixed to a pump drive hub of the torque converter for rotation therewith and a driven gear engaged with the drive gear; a damper clutch control section A for activating or deactivating a damper clutch of torque converter 2 by regulating hydraulic pressure generated at the hydraulic pump 4; a torque pressure conversion section B for reducing hydraulic pressure supplied to first, second, third and fourth solenoid valves S1, S2, S3 and S4 to convert drive pressure supplied from hydraulic pump 4 to levels required for activating friction elements; and shift stage friction elements section C and first and second shift control section D and E whereto torque pressure or drive pressure is supplied selectively.

A pressure regulating valve 6 for regulating line pressure when changing mode from a neutral N range to drive or reverse ranges is connected to an outlet of the hydraulic pump 4 via conduit 8.

Pressure regulating valve 6 is connected via conduit 14 to converter clutch regulator valve 12 which supplies hydraulic pressure to torque converter 2 through conduit 10. A converter feed valve 16 for supplying or obstructing hydraulic pressure is installed in conduit 14.

A spool of converter clutch regulator valve 12 is displaced by fifth solenoid valve S5 which is controlled by transmission control unit (TCU: not shown) (hereinafter referred to as "TCU") to make one of conduits 10a and 10b of conduit 10 communicated with conduit 14 and to make the damper clutch of torque converter 2 activated or deactivated.

Conduit 8 is further extended and connected to solenoid supply valve 18 of torque pressure conversion section B to reduce the line pressure. A portion of pressurized fluid whose pressure is reduced is passed through solenoid supply valve 18 can be supplied to a torque converter regulator valve 22.

Also, a control conduit 24 branched from conduit 20 is connected to pressure regulating valve 6 and converter clutch regulator valve 12 to allow control pressure to be supplied therethrough. The control pressure can be regulated by fifth and sixth solenoid valves S5 and S6.

A spool of torque converter regulator valve 22 is displaced by seventh solenoid valve S7 which is controlled by the TCU. Solenoid valve S7 opens or closes conduit 20 to apply or release hydraulic pressure which exert force on the spool of torque converter regulator valve 22.

Conduit 20 is further extended from seventh solenoid valve S7 to provide hydraulic connection for applying hydraulic pressure on a spool of reverse inhibiter valve 26. Reverse inhibiter valve 26 is an emergency safety valve which prevents the vehicle from being driven rearward when shift lever is selected to the reverse range by error while driving forward, and this operation is made possible by virtue of seventh solenoid valve S7 which is ON/OFF-controlled by the TCU.

Manual valve 30 has modes for "P", "R", "N", "D", "3", "2" and "L" ranges, and hydraulic connections are provided to supply hydraulic pressure to drive pressure conduit 32 at the "D", "3", "2" and "L" ranges.

Drive pressure conduit 32 is connected to torque converter regulator valve 22 and to first friction element 34 of shift stage friction element section C.

Also, drive pressure conduit 32 is connected to first-to-second shift valve 36, and first-to-second shift valve 36 is connected via torque pressure conduit 38 to torque converter regulator valve 22 to receive hydraulic pressure from drive pressure conduit 32 according to an operation of torque converter regulator valve 22.

Control conduit 24 which is connected to conduit 20 to control pressure regulating valve 6 and converter clutch regulator valve 12 is connected to second-to-third and third-to-fourth shift valves 40 and 42. Second-to-third shift valve 40 is connected to first-to-second shift valve 36, and third-to-fourth shift valve 42 is connected to fourth-to-fifth shift valve 44.

First-to-second shift valve 36 is connected via conduit 46 to second clutch valve 50 which supplies hydraulic pressure to second friction element 48. Also, second-to-third and third-to-fourth shift valves 40 and 42 are connected via conduits 52 and 54 third clutch valve 62 and fourth band valve 64 which supply hydraulic pressure to third friction element 56 and fourth and fifth friction elements 58 and 60, respectively. Further, fourth-to-fifth shift valve 44 is connected via conduit 66 to over-drive unit valve 72 which supplies hydraulic pressure to sixth and seventh friction elements 68 and 70.

Shift stage friction element section C includes an eighth friction element 74 which is connected to reverse pressure conduit 76 connected to manual valve 30 to receive hydraulic pressure therefrom and a ninth friction element 76. Eighth friction element 74 is a reverse friction element which is activated at reverse mode only, and ninth friction element 76 is a low reverse clutch.

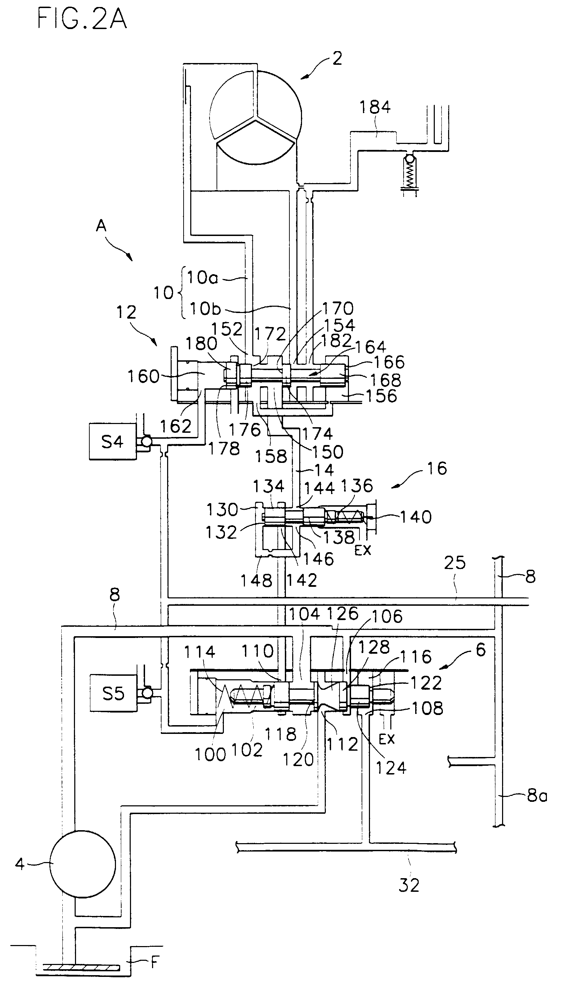

Referring to Fig. 2A, pressure regulating valve 6 of damper clutch control section A has a pressure chamber 100 and a spool 102. Pressure regulating valve 6 has first and second ports 104 and 106 communicated with line pressure conduit 8 directly, a third port 108 communicated with drive pressure conduit 32 such that drive pressure is applied thereto, a fourth port 110 communicated with converter feed valve 16, and a fifth port 112 for reducing the line pressure when the line pressure is increased too high.

Spool 102 is elastically biased rightward by elastic member 114 disposed in pressure chamber 100 which is supplied with hydraulic pressure according to ON/OFF operation of sixth solenoid valve S6. Another pressure chamber 116 receives drive pressure via third port 108, and the hydraulic pressure in this pressure chamber 116 acts against the hydraulic pressure in pressure chamber 100 such that spool 102 is displaced according to the ON/OFF operation of sixth solenoid valve S6.

When sixth solenoid valve S6 is controlled to an OFF state and hydraulic pressure in pressure chamber 100 is increased, spool 102 is displaced rightward because a sum of forces exerted by the hydraulic pressure in pressure chamber 100 and elastic member 114 becomes larger than that exerted by hydraulic pressure in pressure chamber 116. On the contrary, when sixth solenoid valve S6 is controlled to an ON state and hydraulic pressure in pressure chamber 100 is decreased, spool 102 is displaced leftward because the force exerted by elastic member 114 becomes smaller than that exerted by hydraulic pressure in pressure chamber 116.

This displacement of spool 102 makes lands of spool 102 open or close first, second, third, fourth and fifth ports 104, 106, 108, 110 and 112.

Spool 102 includes a first land 118 for opening or closing fourth port 110, a second land 120 for opening or closing fifth port 112, and a third land 124 which has a pressure face 122 on which the hydraulic pressure in pressure chamber 116 is applied. A fourth land 128 having an inclined face 126 is integrally formed between second land 120 and third land 124. Inclined face 126 prevents hydraulic pressure from being exhausted abruptly when exhausting hydraulic pressure through fifth port 112, an exhaust port, in case hydraulic pressure coming through first port 104 is increased.

Converter feed valve 16 which receives hydraulic pressure from fourth port 110 includes a spool 140 having a first land 134 with a pressure face 132 on which hydraulic pressure in pressure chamber 120 is applied and a second land 138 biased by an elastic member 136.

First land 134 opens or closes first port 142 which is communicated with fourth port 110 of pressure regulating valve 6 to obstruct hydraulic pressure flowing through second port 144, selectively. This operation is performed by means of pressure variation within pressure chamber 130 which is communicated with bypass conduit 148 at third port 146.

When hydraulic pressure within pressure chamber 130 is decreased, spool 140 is displaced leftward by the elastic member 136 such that first and second ports 142 and 144 are opened. On the contrary, when the hydraulic pressure within pressure chamber 130 is increased and it overcomes the elastic force by elastic member 136, spool 140 is displaced rightward such that these ports 142 and 144 are closed.

Converter clutch regulator valve 12 which receives hydraulic pressure from converter feed valve 16 includes a first port 150 communicated with conduit 14, second and third ports 152 and 154 communicated with torque converter 2, a fourth port 158 for bypassing hydraulic pressure coming through first port 150 to pressure chamber 156, and a fifth port 162 for supplying hydraulic pressure to another pressure chamber 160 which receives hydraulic pressure from control conduit 24.

A spool 164 of converter clutch regulator valve 12 includes a first land 168 having a pressure face 166 on which hydraulic pressure in pressure chamber 156 is applied, second and third lands 174 and 176 having pressure faces 170 and 172 on which hydraulic pressure coming through first port 150 is applied, and a fourth land 180 having a pressure face 178 on which hydraulic pressure in pressure chamber 160 is applied.

Hydraulic pressure in pressure chamber 160 is obstructed according to ON/OFF control of fifth solenoid valve S5, selectively, to displace spool 164 leftward or rightward and to open or close the ports.

A sixth port 182 is located adjacent to third port 154. Hydraulic pressure exhausted through this sixth port 182 is cooled down as it passes through a cooler 184 and is supplied to a power train part where shift stage friction element section C is located and to an axle of the vehicle to provide lubrication for these parts.

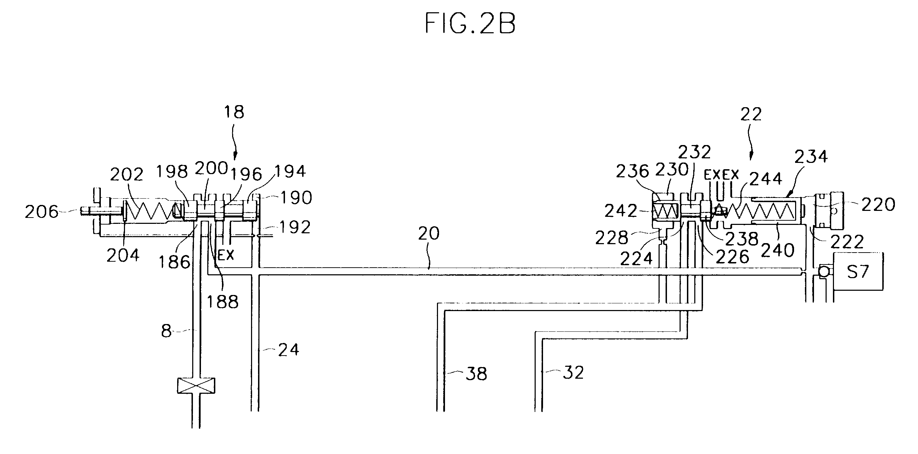

Referring to Fig. 2B illustrating torque pressure conversion section B, solenoid supply valve 18 includes a first port 186 through which line pressure supplied from conduit 8 is supplied, a second port 188 which is communicated with first port 186 selectively and communicated with conduit 20, and a third port 192 which receives hydraulic pressure from conduit 20 and supplies hydraulic pressure to pressure chamber 190.

Also, solenoid supply valve 18 includes a spool 200 having a first land 194 on which hydraulic pressure in pressure chamber 190 is applied and second and third lands 196 and 198 which open or close first and second ports 186 and 188. Spool 200 is biased by an elastic member 202 which acts against hydraulic pressure in pressure chamber 190.

Elastic member 202 is disposed between third land 198 and a pushing plate 204. A screw 206 for adjusting the elastic force exerted by elastic member 202 acting against hydraulic pressure in pressure chamber 190 is abutted on pushing plate 204.

Torque control regulator valve 22 which receives control pressure from conduit 20 includes a first port 222 connected to pressure chamber 220 which is communicated with conduit 20, a second port 224 connected to drive pressure conduit 32, and third and fourth ports 226 and 228 connected to first-to-second shift valve 36.

Fourth port 228 of torque converter regulator valve 22 is communicated with pressure chamber 230. A first spool 232 is positioned beside pressure chamber 230 to open or close second, third and fourth ports 224, 226 and 228, and a second spool 234 is positioned beside pressure chamber 220 to open or close first port 222.

First spool 232 has a cup-shaped plug 236 and a first land 238, and second spool 234 has a cup-shaped plug 240 and disposed coaxial with first spool 232. These cup-shaped plugs 236 and 240 are biased by first and second elastic member 242 and 244, respectively.

Second elastic member 244 is disposed between plug 240 and first land 238 and is compressed when hydraulic pressure in pressure chamber 220 is applied on a backside of plug 240 to influence displacement of first spool 232.

That is, first elastic member 242 is compressed when compression force of second elastic member 244 is applied on first spool 232 to displace first spool 232 leftward in Fig. 2B, and, for this, an elastic force of second elastic member 244 is made larger than that of first elastic member 242.

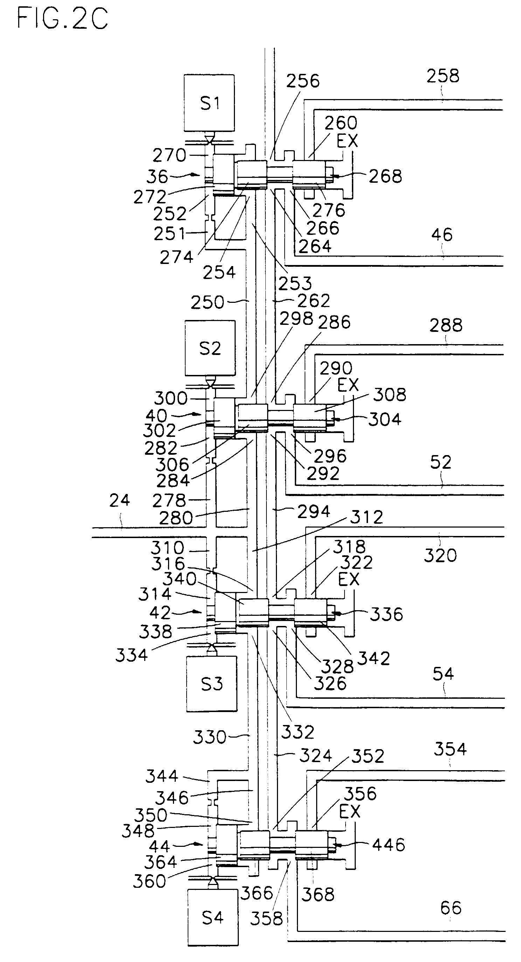

Referring to Fig. 2C illustrating first shift control section D, first-to-second shift valve 36 which receives torque pressure from torque pressure conduit 38 includes first and second ports 252 and 254 communicated with branch conduits 251 and 253 of conduit 250 communicated with second-to-third shift valve 40 to receive control pressure, a third port 256 communicated with torque pressure conduit 38 to receive torque pressure, a fourth port 260 connected via conduit 258 to second clutch valve 50 to receive drive pressure, a fifth port 264 connected via conduit 262 to second-to-third shift valve 40 to transmit torque pressure, and a sixth port 266 communicated with second clutch valve 50 via conduit 46 to supply torque pressure or drive pressure.

Spool 268 of first-to-second shift valve 36 includes a first land 272 located in a pressure chamber 270, a second land 274 which together with first land 272 regulates an opening degree of second port 254 and opens or closes third and fifth ports 256 and 264, and a third land 276 which opens or closes fourth and sixth ports 260 and 266.

First land 272 has a pressure face larger than that of the other lands such that spool 268 can be displaced rightward by hydraulic pressure in pressure chamber 270. Hydraulic pressure is supplied to pressure chamber 270 via an orifice in branch conduit 251, and the hydraulic pressure in pressure chamber 270 is increased or decreased according to an ON/OFF operation of solenoid valve S1.

Second-to-third shift valve 40 which receives hydraulic pressure from control conduit 24 includes first and second ports 282 and 284 which are communicated with conduits 278 and 280 branched from control conduit 24, a third port 286 communicated with first-to-second shift valve 36 via conduit 262 to receive torque pressure, a fourth port 290 communicated with third clutch valve 62 via conduit 288 to receive drive pressure, a fifth port 292 which supplies torque pressure to third-to-fourth shift valve 42 via conduit 294, a sixth port 296 which supplies hydraulic pressure to third clutch valve 64 via conduit 52, and a seventh port 298 communicated with first-to-second shift valve 36 via conduit 250 to supply control pressure.

Second-to-third shift valve 40 has a pressure chamber 300 which receives hydraulic pressure through an orifice of a branch conduit 278 of control conduit 24. Hydraulic pressure in pressure chamber 300 is increased or decreased according to an ON/OFF operation of second solenoid valve S2.

Spool 304 of second-to-third shift valve 40 includes a first land 302 located in pressure chamber 300, a second land 306 which together with first land 304 regulates opening degrees of second and seventh port 284 and 298 and opens or closes third and fifth ports 286 and 292, and a third land 308 which opens or closes fourth and sixth ports 290 and 296.

Third-to-fourth shift valve 42 which receives hydraulic pressure from control conduit 24 includes first and second ports 314 and 316 communicated with conduits 310 and 312 branched from conduit 24, a third port 318 communicated with second-to-third shift valve 40 via conduit 294 to receive torque pressure, a fourth port 322 communicated with fourth band valve 64 via conduit 320 to receive drive pressure, a fifth port 326 which supplies torque pressure to fourth-to-fifth shift valve 44 via conduit 324, a sixth port 328 which supplies hydraulic pressure to fourth band valve 64 via conduit 54, and a seventh port 332 communicated with conduit 330 to supply control pressure to fourth-to-fifth shift valve 44.

Third-to-fourth shift valve 42 has a pressure chamber 334 which receives hydraulic pressure through an orifice of branch conduit 310 of control conduit 24. Hydraulic pressure in pressure chamber 334 is increased or decreased according to an ON/OFF operation of third solenoid valve S3.

Spool 336 of third-to-fourth shift valve 42 includes a first land 338 located in pressure chamber 334, a second land 340 which together with first land 338 regulates opening degrees of second and seventh port 316 and 332 and opens or closes third and fifth ports 318 and 326, and a third land 342 which opens or closes fourth and sixth ports 322 and 328.

Fourth-to-fifth shift valve 44 includes first and second ports 348 and 350 communicated with conduits 344 and 346 branched from control conduit 330, a third port 352 communicated with third-to-fourth shift valve 42 via conduit 324 to receive torque pressure, a fourth port 356 communicated with over-drive unit valve 72 via conduit 354 to receive drive pressure, and a fifth port 358 which supplies hydraulic pressure to over-drive unit valve through conduit 66.

Fourth-to-fifth shift valve 44 has a pressure chamber 360 which receives hydraulic pressure through an orifice of branch conduit 344 of control conduit 330. Hydraulic pressure in pressure chamber 360 is increased or decreased according to an ON/OFF operation of fourth solenoid valve S4.

Spool 446 of fourth-to-fifth shift valve 44 includes a first land 364 located in pressure chamber 360, a second land 366 which together with first land 364 regulates opening degrees of second port 350 and opens or closes third port 352, and a third land 368 which opens or closes fourth port 356.

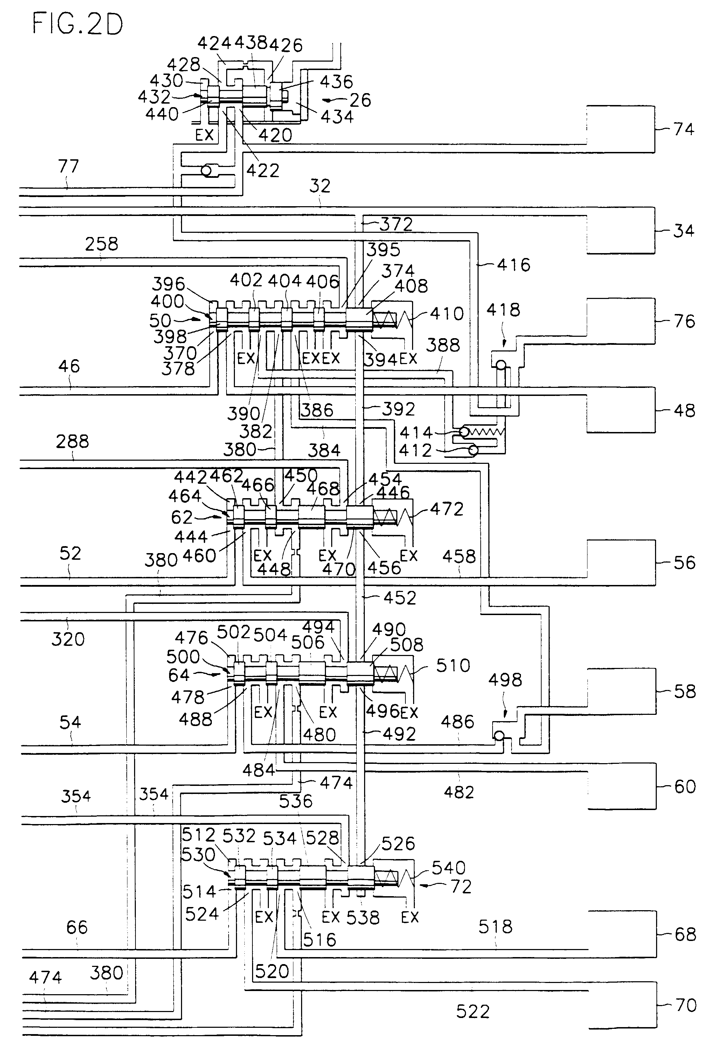

Referring to Fig. 2D illustrating second shift control section E, second clutch valve 50 includes a first port 370 communicated with conduit 46 which is connected to sixth port 266 of first-to-second shift valve 36 to receive hydraulic pressure, a second port 374 connected to a branch conduit 372 of drive pressure conduit 32 to receive hydraulic pressure, a third port 378 communicated with a conduit 376 connected to second friction element 48, a fourth port which receives hydraulic pressure supplied along conduit 380 connected from manual valve 30 through third clutch valve 62 to activate fourth friction element 58 when the shift lever is selected to the "2" range, a fifth port 386 connected to conduit 384 to supply the hydraulic pressure to fourth friction element 58, a sixth port 390 connected to conduit 388 to receive hydraulic pressure supplied along conduit 380 connected from manual valve 30 through third clutch valve 62 and supply the hydraulic pressure to ninth friction element 74 to activate the same when the shift lever is selected to "2" or "L" ranges, and seventh and eighth ports 394 and 395 connected to third and second clutch valves 62 and 36 to supply drive pressure.

A spool 400 includes a first land 398 on which hydraulic pressure in pressure chamber 396 is applied directly, second and third lands 402 and 404 which supply hydraulic pressure to fourth port 382 through fifth or sixth ports 396 or 390, selectively, fourth and fifth lands 406 and 408 which supply hydraulic pressure to second port 374 through seventh or eighth ports 394 or 395. Spool 400 is biased by elastic member 410 acting against hydraulic pressure in pressure chamber 396 which is applied on first land 398 to prevent spool 400 from being displaced abruptly.

Hydraulic pressure from fifth port 390 can be supplied to ninth friction element 76 through conduit 388. Two check valves 412 and 414 of opposite flow directions and a shuttle valve 418 which prevents hydraulic pressure supplied from reverse clutch inhibiter valve 26 to ninth friction element 76 via conduit 416 from being reversely flow toward conduit 416 are installed in conduit 388.

Reverse clutch inhibiter valve 26 includes a first port 420 which receives hydraulic pressure from reverse pressure conduit 77, a second port 422 which supplies reverse pressure to ninth friction element 76 via conduit 416, and third and fourth ports 426 and 428 which make a bypass conduit 424 connected. Spool 432 can be displaced by hydraulic pressure in pressure chamber 434 which is regulated according to an ON/OFF operation of seventh solenoid valve S7 and applied on first land 436.

Spool 432 has second and third lands 438 and 440 which have cross sections smaller than that of first land 436, and hydraulic pressure flowing through first and second ports 420 and 422 is applied on second and third lands 438 and 440.

Third clutch valve 62 which receives hydraulic pressure from sixth port 296 of second-to-third shift valve 40 via conduit 52 includes a first port 444 which receives the hydraulic pressure and supplies the hydraulic pressure to pressure chamber 442, a second port 446 which receives hydraulic pressure from seventh port 394 of second clutch valve 50 via conduit 392, a third port 448 communicated with conduit 380 which is connected to manual valve 30, a fourth port 450 which transmits hydraulic pressure supplied from third port 448 through conduit 380, fifth and sixth ports 454 and 456 which supply drive pressure to third-to-fourth shift valve 40 and fourth band valve 64 through conduits 288 and 452, and a seventh port 460 which transmits hydraulic pressure supplied to first port 444 to third friction element 56 through conduit 458.

A spool 464 includes a first land 462 on which hydraulic pressure in pressure chamber 442 is applied and which makes hydraulic pressure supplied through first port 444 transmitted to seventh port 460, selectively, second and third lands 466 and 468 which make third port 448 communicated with fourth port 450, selectively, and a fourth land 470 which makes second port 446 connected to fifth and sixth ports 454 and 456. This spool 464 is biased by an elastic member 472 acting against hydraulic pressure in pressure chamber 442 which is applied on first land 462 to prevent spool 464 from being displaced abruptly.

Fourth band valve 64 which receives hydraulic pressure from manual valve 30 via conduit 474 when the shift lever is selected to "3", "2" or "L" ranges includes a first port 478 which receives hydraulic pressure from conduit 54 connected to sixth port 328 of third-to-fourth shift valve 42 and supplies the hydraulic pressure to pressure chamber 476, a second port 480 connected to conduit 474, a third port 484 which transmits hydraulic pressure supplied from second port 480 to fifth friction element 60 through conduit 482, a fourth port 488 which transmits hydraulic pressure supplied from first port 478 to fourth friction element 58 through conduit 486, a fifth port 490 which receives drive pressure from third clutch valve 62 through conduit 452, and sixth and seventh ports 494 and 496 which transmit hydraulic pressure supplied through fifth port 490 to third-to-fourth shift valve 42 and over-drive unit valve 72 via conduits 320 and 492.

Conduit 54 which is connected to first port 478 is connected to conduit 486 to supply hydraulic pressure to fourth friction element 58 at fourth and fifth speeds of the "D" range. A shuttle valve 498 is installed in conduit 486 to prevent hydraulic pressure from flowing toward conduit 486 through which hydraulic pressure is supplied to fourth friction element 58 at the "2" range.

A spool 500 of fourth band valve 64 is displaced by hydraulic pressure in pressure chamber 476 and includes a first land 502 which transmits hydraulic pressure supplied through first port 478 to fourth port 488, selectively, second and third ports 504 and 506 which make second and third ports 480 and 484 communicated with each other, and a fourth land 508 which make fifth port 490 communicated with sixth and seventh ports 494 and 496. This spool 500 is biased by elastic member 510 which acts against hydraulic pressure in pressure chamber 476 to prevent spool 500 from being displaced abruptly.

Over-drive unit valve 72 supplies hydraulic pressure to sixth friction element 68 which is activated at all of the speed ranges except the "P" range and a fifth speed of the "D" range and to seventh friction element 70 which is activated at the fifth speed of the "D" range only. This over-drive unit valve 72 includes a first port 514 through which hydraulic pressure from fifth port 358 of fourth-to-fifth shift valve 44 is supplied to a pressure chamber 512, a second port 516 connected to conduit 8 directly, a third port 520 which transmits hydraulic pressure supplied from second port 516 to sixth friction element 68 through conduit 518, a fourth port 524 which transmits hydraulic pressure supplied from first port 514 to seventh friction element 70 through conduit 522, a fifth port 526 which receives drive pressure from fourth band valve 64 through conduit 492, and sixth port 528 which transmits hydraulic pressure supplied from fifth port 526 to fourth port 356 of fourth-to-fifth shift valve 44 through conduit 354.

A spool 530 of over-drive unit valve 72 is displaced by hydraulic pressure in pressure chamber 512 and includes a first land 532 which transmits hydraulic pressure supplied to first port 514 to fourth port 524, selectively, second and third lands 534 and 536 which make second port 516 communicated with third port 520, and a fourth land 538 which make fifth port 526 communicated with sixth port 528. This spool 530 is biased by elastic member 540 which acts against hydraulic pressure in pressure chamber 512 to prevent spool 530 from being displaced abruptly.

Solenoid valves S1 through S7 are duty-controlled or ON/OFF-controlled by the TCU according to the vehicle speed or a variation of throttle position.

In the automatic transmission system as described above, fluid from an oil pan F is exhausted from hydraulic pump 4 as the driven gear of the pump is rotated.

The fluid is transmitted to torque converter regulator valve 22 through solenoid supply valve 18. Hydraulic pressure flowing through control conduit 24 branched from conduit 20 acts as control pressure for pressure regulating valve 6 and converter clutch regulator valve 12. A portion of pressurized fluid is transmitted to first-to-second and fourth-to-fifth shift valves 36 and 44 via second-to-third and third-to-fourth shift valves 40 and 42 of first shift control section D.

Also, a portion of the pressurized fluid exhausted from hydraulic pump 4 is transmitted to manual valve 30 along conduit 8a connected to conduit 8. This flow of pressurized fluid is obstructed at manual valve 30 and a portion of the pressurized fluid is transmitted to sixth friction element 68 via over-drive unit valve 72 when the shift lever is selected to the neutral range.

If the shift lever is selected to the drive range at this state, line pressure in conduit 8 is regulated by sixth solenoid valve S6 which is duty-controlled by the TCU.

If a slip occurs at friction elements related to speed shifting, sixth solenoid valve S6 is controlled to an OFF state which causes hydraulic pressure in pressure chamber 100 of pressure regulating valve 6 increased as shown in Fig. 2A. Then a sum of forces exerted by the hydraulic pressure and elastic member 114 is applied on first land 118 and, thus, makes spool 102 displaced rightward in Fig. 2A.

However if no slip occurs at the friction elements related to the speed shifting, sixth solenoid valve S6 is duty-controlled which causes the hydraulic pressure in pressure chamber 100 exhausted. Then spool 102 is displaced leftward in Fig. 2A by hydraulic pressure applied on a right side of third land 124.

Then second land 120 of spool 102 becomes located between first port 104 and fifth port 112, an exhaust port, to make these ports 104 and 112 communicated with each other, and fluid in conduit 8 is returned back to oil pan F.

Driving loss of the hydraulic pump can be minimized by this returning of the fluid. At this moment, if a slip occurs again at friction elements related to speed shifting, sixth solenoid valve S6 is controlled to the OFF state which causes the hydraulic pressure in pressure chamber 100 of pressure regulating valve 6 increased. Then spool 102 is displaced rightward to obstruct fifth port 112, the exhaust port, and make the hydraulic pressure in conduit 8 act as an activating pressure for the friction elements.

This operation is repeated continuously according to the fact that the slip occurs or not, and, in this process, first port 104 becomes communicated with fourth port 110 such that the line pressure in conduit 8 is transmitted to first port 142 of converter feed valve 16.

Because spool 140 of converter feed valve 16 is biased by elastic member 136 and displaced rightward slightly in Fig. 2A such that first port 142 is kept opened partially, hydraulic pressure flowing through the first port 142 is exhausted through second port 144 and a portion of pressurized fluid is transmitted to pressure chamber 130 through bypass conduit 148.

The hydraulic pressure flowing into pressure chamber 130 makes spool 140 displaced rightward to obstruct hydraulic pressure flowing out through second port 144. According to this operation, damper clutch control pressure and lubricant control pressure are controlled.

Hydraulic pressure flowing through first port 144 is supplied to first port 150 of converter clutch regulator valve 12 and flows through conduit 10a or 10b.

Selection of conduit 10a or 10b is performed according to ON/OFF control of fifth solenoid valve S5. In a range where the damper clutch is activated, fifth solenoid valve S5 is controlled to an ON state by the TCU to decrease hydraulic pressure in pressure chamber 160. Then a portion of pressurized fluid coming through first port 150 is transmitted to pressure chamber 156 located at right side of spool 164 through fourth port 158. In this state, hydraulic pressure supplied from conduit 14 and applied on pressure face 172 of second land 174 simultaneously acts against the hydraulic pressure transmitted to pressure chamber 156. So spool 164 is displaced leftward in Fig. 2A under the application of hydraulic pressure on pressure face 166 of first land 168.

As a result of this displacement of spool 164, second land 174 is located at left side of first port 150 and first land 168 is located at right side of third port 154 such that first port 150 become communicated with third port 154. Thus hydraulic pressure coming through first port 150 is transmitted to torque converter 2 via conduit 10b to activate the damper clutch.

On the contrary, in a range where the damper clutch is not activated, fifth solenoid valve S5 is controlled to an OFF state by the TCU to increase hydraulic pressure in pressure chamber 160 which is applied on pressure face 178 of fourth land 180.

Even though hydraulic pressure in the other pressure chamber 156 also is applied on pressure face 166 of first land 168, spool 164 is displaced rightward because the cross section of pressure face 178 of fourth land 180 is larger than that of pressure face 166 of first land 168.

As a result of this rightward displacement of spool 164, second land 174 is located at left side of third port 154 to obstruct hydraulic pressure coming through first port 150, and second port 152 is partially opened by third land 176 such that hydraulic pressure coming through first port 150 is transmitted to conduit 10a via second port 152.

Ranges where the damper clutch is activated or deactivated are detected by a sensor which outputs signal to the TCU. The damper clutch is activated or deactivated by fifth solenoid valve S5 which is ON-controlled or OFF-controlled by this signal.

These operations are performed at shift stages as explained below.

### [First speed of the "D" range]

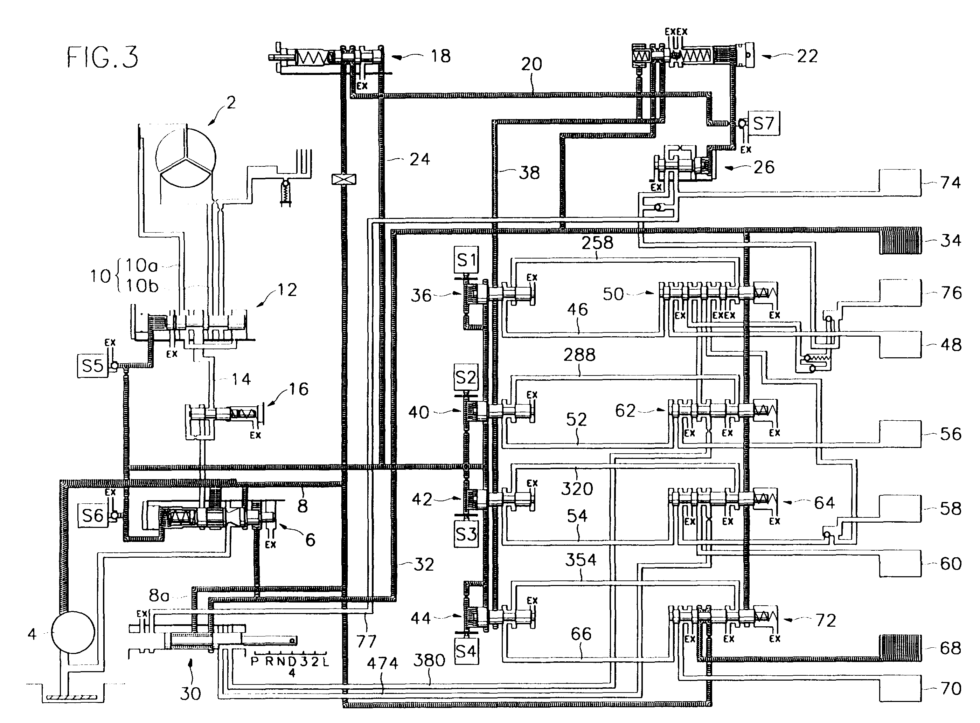

Referring to Fig. 3 illustrating the hydraulic control system according to the invention at a first speed of "D" the range, a portion of pressurized fluid from conduit 8 through which line pressure regulated by pressure regulating valve 6 flows is used to activate or deactivate the damper clutch, and remaining portion of the pressurized fluid is supplied to solenoid supply valve 18 via first port 186 thereof in the torque pressure conversion section and to manual valve 30.

Because first port 186 is partially opened by third land 198 of spool 200 which is displaced rightward by elastic member 202, the line pressure comes in through this first port 186 and flows along conduit 20 via second port 188.

Hydraulic pressure transmitted through third port 192 which is communicated with conduit 20 makes hydraulic pressure within pressure chamber 190 increased. If hydraulic pressure applied on first land 194 overcomes the elastic force biasing spool 200, spool 200 is displaced leftward in Fig. 2B such that second land 196 is located between first port 186 and second port 188 to obstruct fluid flow.

Hydraulic pressure which has passed through solenoid supply valve 18 is supplied to torque converter regulator valve 22 and second-to-third and third-to-fourth shift valves 40 and 42 via conduit 20 and control conduit 24 and then to first-to-second and fourth-to-fifth shift valves 36 and 44. As seventh solenoid valve S7 is maintained to an OFF state, hydraulic pressure supplied to torque converter regulator valve 22 is applied to pressure chamber 220. Accordingly, torque pressure is passed through torque converter regulator valve 22 and supplied to every shift valves 36, 40, 42 and 44 and wait there.

Because first, second, third and fourth solenoid valves S1, S2, S3 and S4 are controlled to ON states by the TCU, hydraulic pressure supplied to second-to-third and third-to-fourth shift valves 40 and 42 via control conduit 24 does not make first-to-second, second-to-third, third-to-fourth and fourth-to-fifth shift valves 36, 40, 42 and 44 activated.

Simultaneously, hydraulic pressure flowing through conduit 8a is transmitted to manual valve 30 and over-drive unit valve 72. The hydraulic pressure transmitted to manual valve 30 is supplied to a forward clutch, a first friction element 34, via drive pressure conduit 32 to activate same directly. The hydraulic pressure flowing through conduit 32 is supplied to each valve 50, 62, 64 and 72 and stay there (See Fig. 3).

Thus, the first speed of forward driving is performed with first friction element 34 activated.

### [first-to-second shifting at the "D" range]

As the vehicle speed and the opening degree of the throttle position are increased at the first speed, the TCU controls sixth solenoid valve S6 and first solenoid valve S1 among first, second, third and fourth solenoid valves S1, S2, S3 and S4 which were controlled to OFF states to an ON state and, simultaneously, controls seventh solenoid valve S7 to an ON state initially and then to an OFF state gradually.

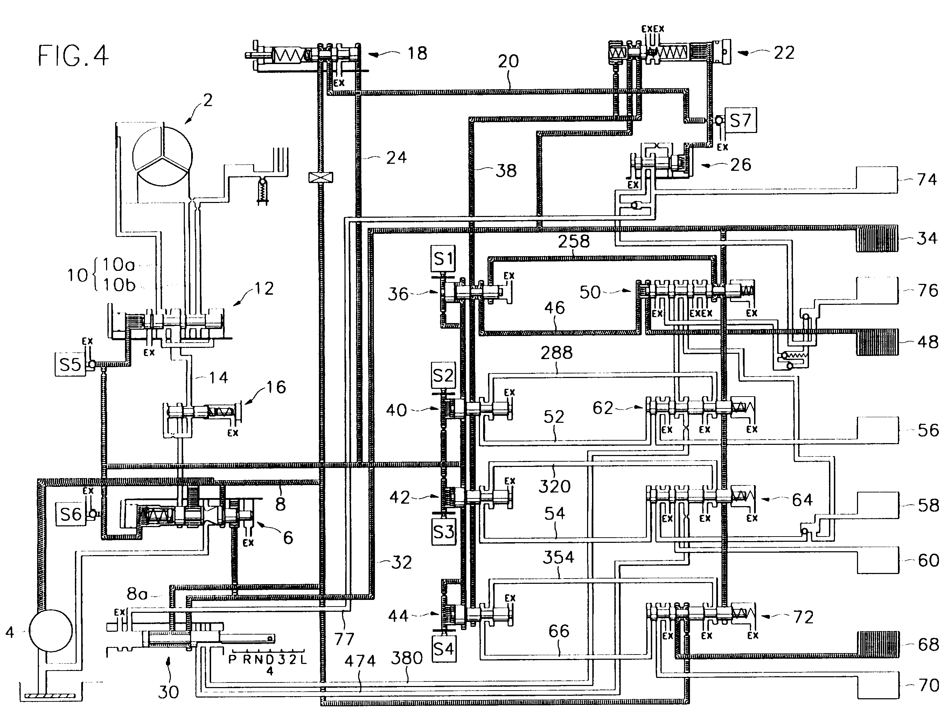

Then, hydraulic pressure which is supplied through conduit 20 as shown in Fig. 4 is supplied to pressure chamber 220 (See Fig. 2B) of torque control regulator valve. This hydraulic pressure overcomes elastic forces exerted by elastic members 244 and 242 one by one and makes spool 232 displaced leftward such that second and third ports 224 and 226 become communicated with each other and, thus, hydraulic pressure supplied to drive pressure conduit 32 is transmitted to each shift valves 36, 40, 42 and 44 through conduit 38.

Simultaneously, as first solenoid valve S1 is controlled to an ON state by the TCU, hydraulic pressure in pressure chamber 270 of first-to-second shift valve 36 (See Fig. 2C) is decreased and a state wherein spool 268 is displaced leftward is maintained to make third, fifth and sixth ports 256, 264 and 266 communicated with each other. Torque pressure flowing through torque pressure conduit 38 flows through conduits 262 and 46 branched from conduit 38. Hydraulic pressure flowing through conduit 262 stays at the third port of second-to-third shift valve 40. Hydraulic pressure flowing through conduit 46 is supplied to pressure chamber 396 of second clutch valve 50 and make spool 400 displaced rightward in Fig. 2A.

As torque pressure applied on spool 400 overcomes the elastic force by elastic member 418 and thus pushes spool 400 rightward, first port 370 and third port 378 become communicated with each other and hydraulic pressure is supplied to second friction element 48 to activate the same.

Because second port 374 becomes communicated with eighth and seventh ports 395 and 394 according to the operation of second clutch valve 50, hydraulic pressure supplied via conduit 372 branched from drive pressure conduit 32 is supplied through conduits 44 and 392 and stays at fourth port 260 of first-to-second shift valve 50 and second port 446 of third clutch valve 62.

Thus, at the first-to-second speed shifting, sixth and second friction elements 68 and 48 together with first friction element 34 which was activated at the first speed are activated to perform speed shifting (See Fig. 4).

### [Second speed of the "D" range]

As the first-to-second speed shifting is completed by torque pressure, first solenoid valve S1 which was controlled to an ON state by the TCU is controlled to an OFF state.

Then, in a state where first and second friction elements 34 and 48 are activated, control pressure is supplied to pressure chamber 270 of first-to-second shift valve 36 to displace spool 268 rightward. Third port 256 through which torque pressure was supplied is obstructed, and, simultaneously, fourth port 260 at which drive pressure stayed becomes communicated with sixth port 266. As a result, drive pressure is supplied to activate second friction element 48 through conduit 36 and second clutch valve 50.

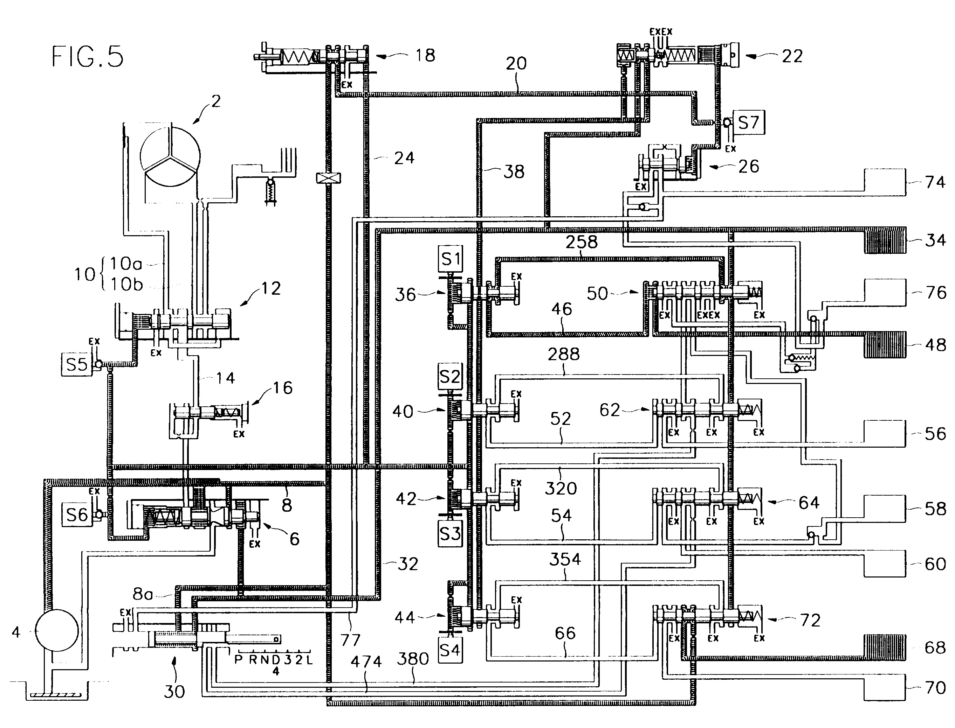

That is, second friction element 48 is activated by drive pressure instead of torque pressure (See Fig. 5).

### [Second-to-third shifting at the "D" range]

As the vehicle speed and the opening degree of the throttle position are increased at the second speed, the TCU controls second solenoid valve S2 among first, second, third and fourth solenoid valves S1, S2, S3 and S4 to an ON state and, simultaneously, controls seventh solenoid valve S7 to an ON state once and then to an OFF state gradually to decrease torque pressure gradually.

Then, in a state where first, second and sixth friction elements 34, 48 and 68 are activated as have been in the second speed, hydraulic pressure supplied to pressure chamber 300 of second-to-third shift valve 40 is exhausted according to an ON operation of second solenoid valve S2 to displace spool 304 leftward slightly.

Simultaneously, first port 224 and second port 226 of torque control regulator valve 22 are communicated with each other according to an OFF operation of seventh solenoid valve S7, and torque pressure is supplied along conduit 38. Even though spool 268 of first-to-second shift valve 36 is displaced rightward according to an OFF operation of first solenoid valve S1 in this state, control pressure supplied to second-to-third shift valve 40 is exhausted according to an ON operation of second solenoid valve S2 and hydraulic pressure applied to first-to-second shift valve 36 is weak. Thus torque pressure supplied through third port 256 makes spool 268 displaced leftward to obstruct fourth port 260 through which drive pressure was supplied and make third port 256 through which torque pressure was supplied communicated with fifth and sixth ports 264 and 266.

Then torque pressure is supplied through sixth port 266 to continue the activated state of second friction element 48 which was activated by drive pressure. And, as spool 304 is kept displaced leftward under the operation of second-to-third shift valve 40, torque pressure which has passed through fifth port 264 flows through third port 318, fifth and sixth ports 292 and 296, and conduits 294 and 52.

Also, as spool 336 of third-to-fourth shift valve 42 is kept displaced rightward under the operation of third solenoid valve S3, hydraulic pressure flowing through conduit 294 stays at third port 318, and hydraulic pressure coming through conduit 52 is supplied to pressure chamber of third clutch valve 62.

Then spool 464 of third clutch valve 62 is displaced rightward by the hydraulic pressure to make first port 444 to which hydraulic pressure is supplied communicated with second port 460, and, thus, the hydraulic pressure is supplied to third friction element 56 through conduit 458 connected to second port 464 to activate the third friction element 56 and perform the second-to-third speed shifting at the "D" range.

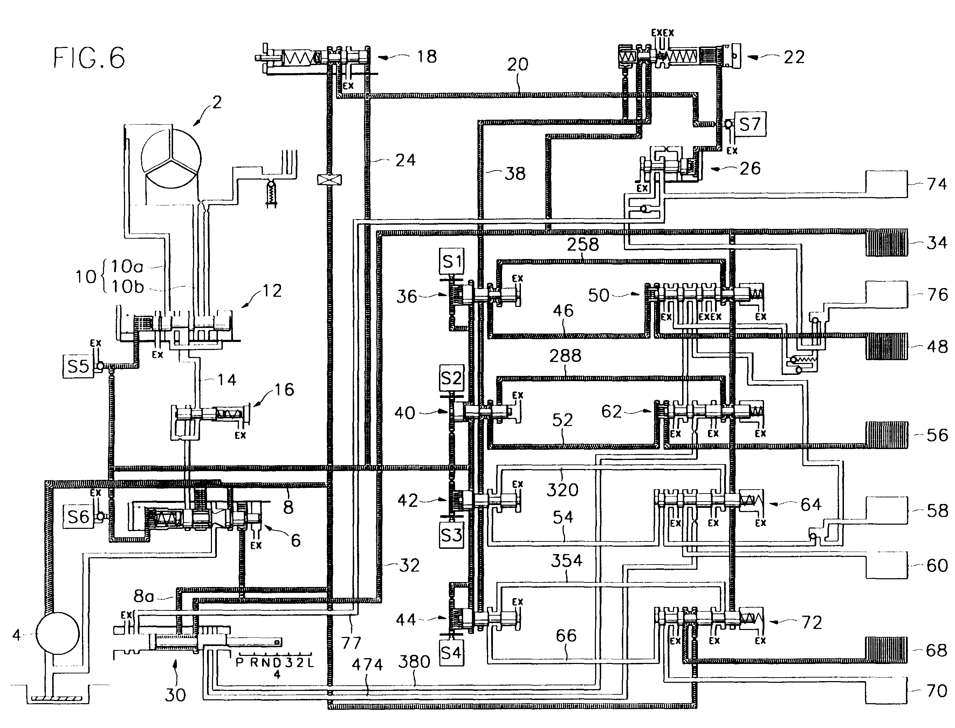

Because second port 446 becomes communicated with fifth and sixth ports 454 and 456 by a rightward displacement of spool 464, drive pressure supplied through conduit 392 stays at fourth port 290 of second-to-third shift valve 40 via conduit 288, and hydraulic pressure which has passed through sixth port 456 stays at fifth port 490 of fourth band valve 64 and becomes to possess a circuit as shown in Fig. 6.

Accordingly, the second-to-third speed shifting of the "D" range is performed with first, second, third and sixth friction elements 34, 48, 56 and 68 activated.

### [Third speed of the "D" range]

As the second-to-third speed shifting is performed, the TCU controls second solenoid valve S2 from an ON state to an OFF state and, simultaneously, keeps seventh solenoid valve S7 to an OFF state.

Then hydraulic pressure in pressure chamber 300 of second-to-third shift valve 40 is increased according to an OFF state control of second solenoid valve S2, and spool 304 is displaced rightward. At this state, third port 286 is obstructed and fourth port 290 at which drive pressure is stayed become communicated with sixth port 296 thus drive pressure keep third friction element 56 which was activated by torque pressure activated continuously.

Because torque pressure which was supplied to first-to-second shift valve 36 is obstructed, simultaneously, and thus the force pushing spool 268 leftward is released, spool 268 is displaced rightward by control pressure supplied to pressure chamber 270 to obstruct third port 256 and make fourth port 260 to which drive pressure was supplied communicated with sixth port 266 such that second friction element 48 is activated by drive pressure.

That is, second and seventh solenoid valves S2 and S7 are controlled to make second and third friction elements 48 and 56 activated by drive pressure instead of torque pressure which activated these elements 48 and 56 at the second-to-third speed shifting.

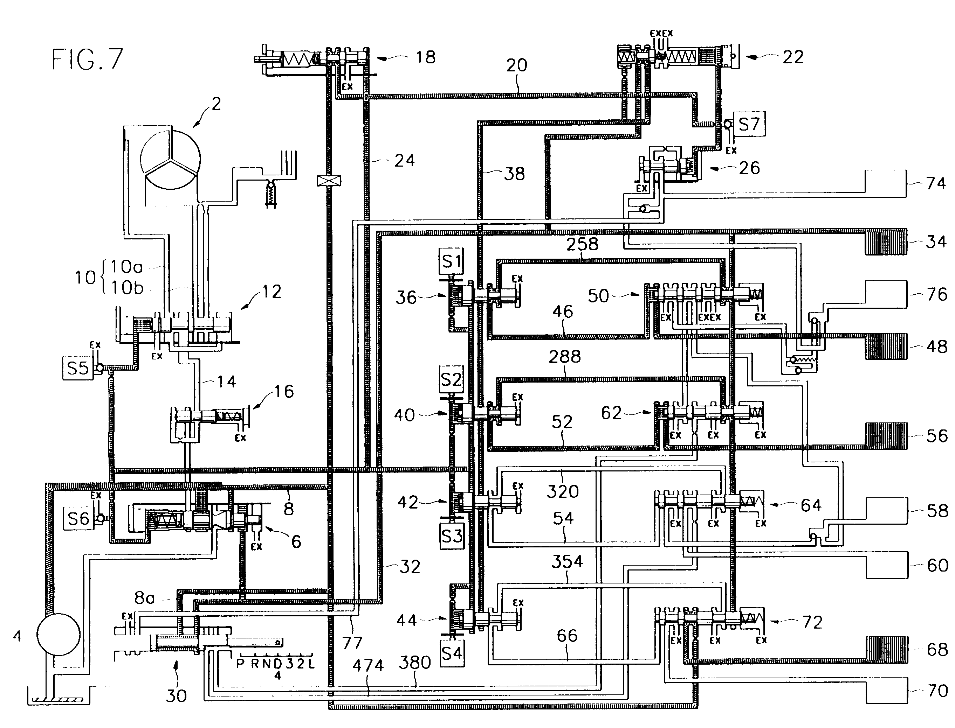

Thus, the third speed is performed with first, second, third and sixth friction elements 34, 48, 56 and 68 activated (See Fig. 7).

### [Third-to-fourth shifting at the "D" range]

As the vehicle speed and the opening degree of the throttle position are increased at the third speed, the TCU controls third solenoid valve S3 to an ON state and, simultaneously, controls seventh solenoid valve S7 to the ON state once and then to the OFF state gradually to decrease torque pressure gradually.

Then, in a state where first, second, third and sixth friction elements 34, 48, 56 and 68 are activated as have been in the third speed, torque pressure from torque control regulator valve 22 is supplied through conduit 38, and, simultaneously, hydraulic pressure in pressure chamber 334 of third-to-fourth shift valve 42 is decreased according to the ON state control of third solenoid valve S3 to displace spool 336 leftward.

Simultaneously, first and second ports 224 and 226 of torque control regulator valve 22 are communicated with each other according to the OFF control of seventh solenoid valve S7, and torque pressure is supplied along conduit 38 through first-to-second and second-to-third shift valves 36 and 40 to third-to-fourth and fourth-to-fifth shift valves 42 and 44. In a state where spool 336 of third-to-fourth shift valve 42 is displaced leftward according to the ON state operation of third solenoid valve S3, the torque pressure is transmitted to third port 318 and, thus, hydraulic pressure is supplied through fifth and sixth ports 326 and 328 which are communicated with third port 318. The torque pressure passed through fifth port 326 is transmitted to third port 352 of fourth-to-fifth shift valve 44, and hydraulic pressure passed through sixth port 328 is supplied to pressure chamber 476 through conduit 54 and first port 478 of fourth band valve 64.

Thus spool 500 is displaced rightward by the hydraulic pressure supplied to pressure chamber 476 to make first port 478 communicated with fourth port 488. Thus, hydraulic pressure is supplied to fourth friction element 58 through conduit 486 connected to fourth port 488 and activate the fourth friction element 58 to perform third-to-fourth speed shifting at the "D" range.

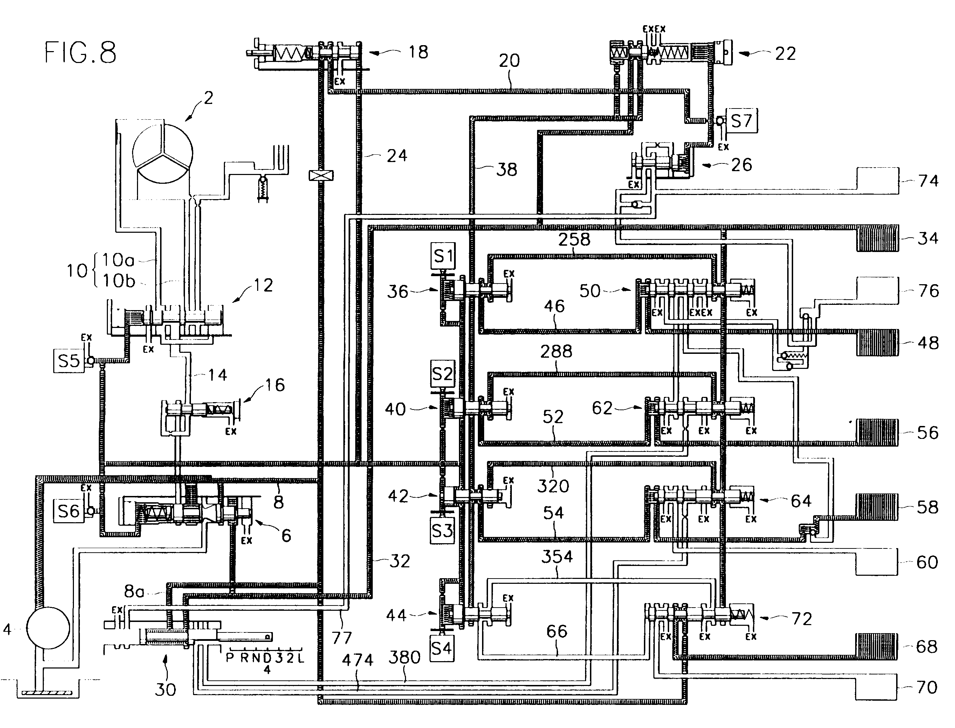

Also, because fifth port 490 becomes communicated with sixth and seventh ports 494 and 496 by the rightward displacement of spool 500, drive pressure supplied through conduit 452 stays at fourth port 322 of third-to-fourth shift valve 42, and hydraulic pressure passed through seventh port 496 becomes to stay at fifth port 526 of over-drive unit valve 72 (See Fig. 8).

Accordingly, third-to-fourth speed shifting of the "D" range is performed with first, second, third, fourth and sixth friction elements 34, 48, 56, 58 and 68 activated.

### [Fourth speed of the "D" range]

As the third-to-fourth speed shifting is performed, the TCU controls third solenoid valve S3 to an OFF state and, simultaneously, keeps seventh solenoid valve S7 to an OFF state. Thus hydraulic pressure is supplied to pressure chamber 334 of third-to-fourth shift valve 42 to displace spool 336 rightward and obstruct torque pressure.

Then third port 318 becomes obstructed and fourth port 332 to which drive pressure was supplied becomes communicated with sixth port 328 to supply drive pressure to activate fourth friction element 58.

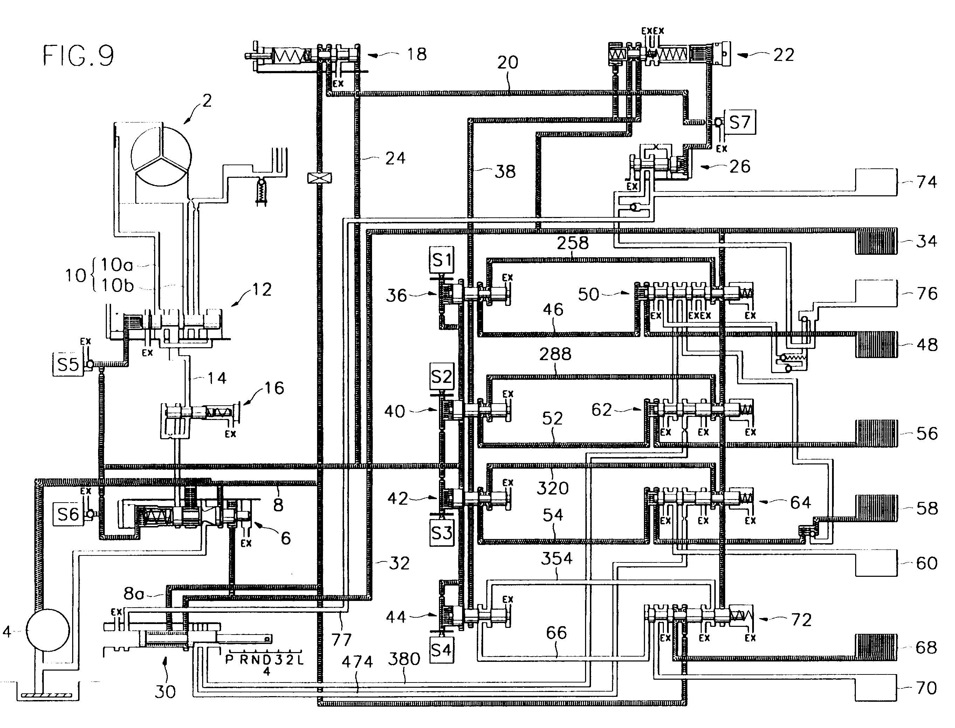

Thus fourth speed is performed with first, second, third, fourth and sixth friction elements 34, 48, 56, 58 and 68 activated (See Fig. 9).

### [Fourth-to-fifth shifting at the "D" range]

As the vehicle speed and the opening degree of the throttle position are increased at the fourth speed, the TCU controls fourth solenoid valve S4 to an ON state and, simultaneously, controls seventh solenoid valve S7 to the ON state once and then to the OFF state gradually to increase torque pressure gradually.

Then, in a state where first, second, third, fourth and sixth friction elements 34, 48, 56, 58 and 68 are activated as have been in the fourth speed, hydraulic pressure in pressure chamber 360 of fourth-to-fifth shift valve 44 is decreased according to the ON state control of fourth solenoid valve S4 to displace spool 362 leftward.

Simultaneously, torque pressure supplied from torque control regulator valve 22 via conduit 38 is supplied through first-to-second, second-to-third and third-to-fourth shift valves 36, 40 and 42 via conduit 324 to third port 352 of fourth-to-fifth shift valve 44.
Then, because the torque pressure is transmitted to third port 352 of fourth-to-fifth shift valve 44 in a state where spool 362 is displaced leftward, hydraulic pressure is supplied through fifth port 358 which is communicated with third port 352 to conduit 66 and then to pressure chamber 512 of over-drive unit valve 72 through first port 514.

By the hydraulic pressure supplied to pressure chamber 512, spool 530 is displaced rightward to obstruct second port 516 through which hydraulic pressure from conduit 8a was supplied and deactivate sixth friction element 68, Also first port 514 is communicated with fourth port 524 such that hydraulic pressure is supplied via conduit 522 which is connected to fourth port 524 to seventh friction element 70 to activate the same and, thus, perform fourth-to-fifth speed shifting at the "D" range.

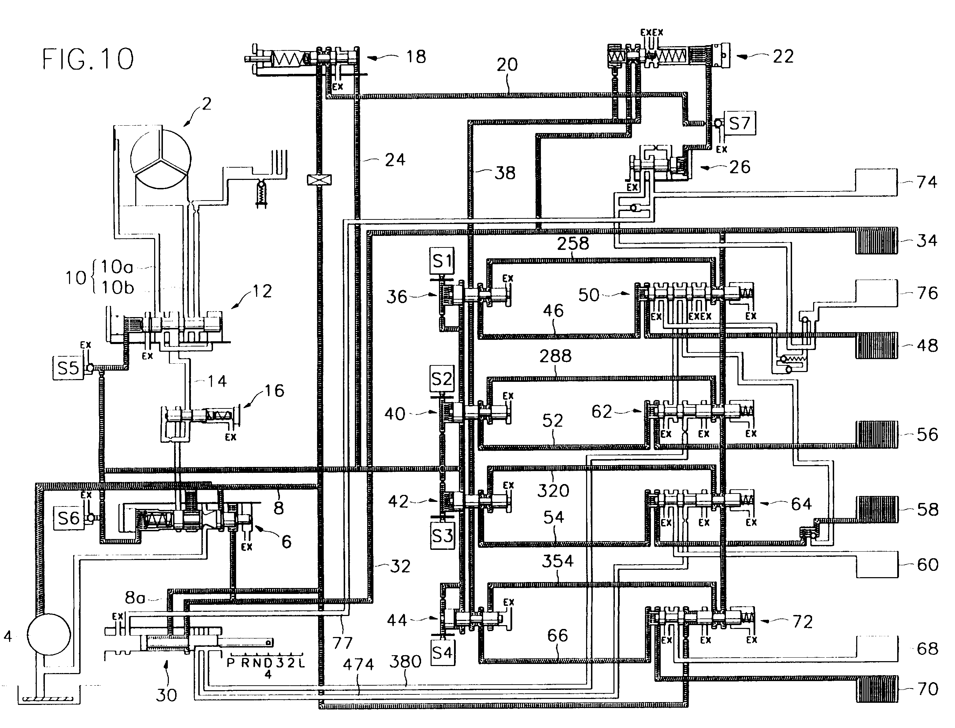

Because fifth port 526 becomes communicated with sixth port 528 by the rightward displacement of spool 530, drive pressure supplied through conduit 354 stays at fourth port 356 of fourth-to-fifth shift valve 44 (See Fig. 10).

Accordingly fourth-to-fifth speed shifting at the "D" range is performed with first, second, third, fourth and seventh friction elements 34, 48, 56, 58 and 70 activated.

### [Fifth speed of the "D" range]

As the fourth-to-fifth speed shifting is performed, the TCU controls fourth solenoid valve S4 to an OFF state to supply hydraulic pressure to pressure chamber 360 of fourth-to-fifth shift valve 44 and keeps seventh solenoid valve S7 to an OFF state.

Then hydraulic pressure is supplied to pressure chamber 360 of fourth-to-fifth shift valve 44 to displace spool 446 rightward and obstruct torque pressure and, simultaneously, to make fourth port 356 to which drive pressure was supplied communicated with fifth port 358 such that second, third, fourth and seventh friction elements 48, 56, 58 and 70 are activated.

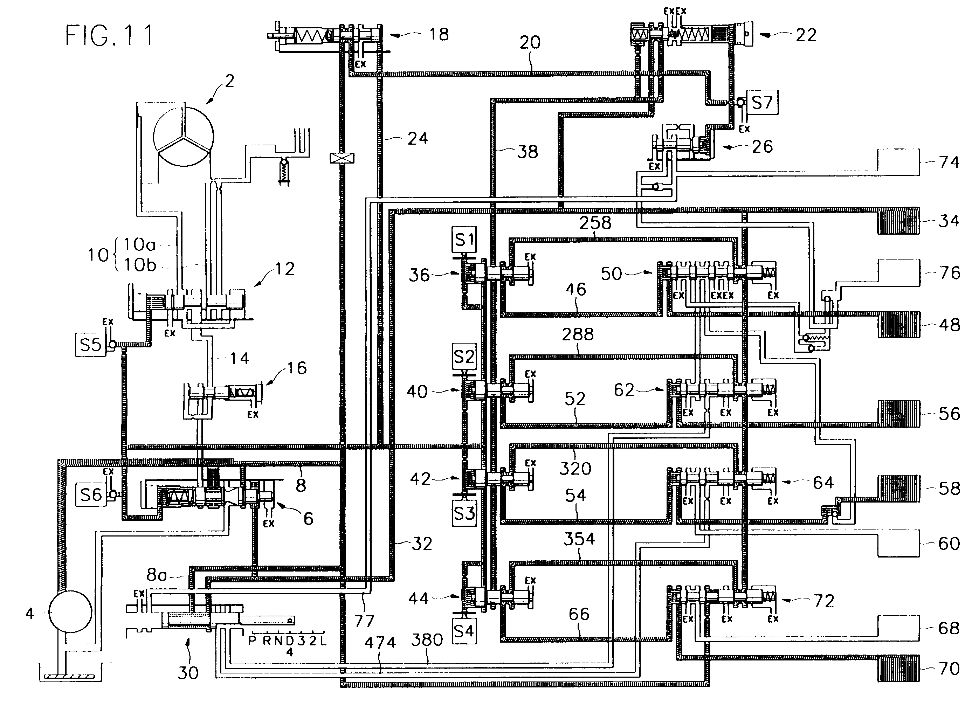

Thus fifth speed is performed with first, second, third, fourth and seventh friction elements 34, 48, 56, 58 and 70 activated (See Fig. 11).

Speed shifting processes from the first speed to the fifth speed are explained up to now. According to the present embodiment, the friction elements are activated by torque pressure when speed shifting is initiated and then the torque pressure is replaced by drive pressure shortly to improve responsiveness and make the skip shifting possible.

In a skip shifting, the speed is not shifted sequentially but shifted, e.g., from the first speed to the fifth speed directly or from the first speed to the third speed directly. The skip shifting is explained below.

### [Third-to-fifth skip shifting at the "D" range]

If an accelerator pedal is pressed abruptly at the third speed, the TCU detects this, controls sixth solenoid valve S6 directly to regulate line pressure, and controls seventh solenoid valve S7 to decrease once and then increase torque pressure gradually.

Simultaneously, third and fourth solenoid valves S3 and S4 among the solenoid valves which were controlled to the OFF states to perform the third speed driving are controlled to the ON states to exhaust hydraulic pressure in pressure chambers 334 and 360 of third-to-fourth and fourth-to-fifth shift valves 42 and 44.

By this, hydraulic pressure in pressure chambers 334 and 360 are decreased, and, as spools 336 and 362 are displaced leftward, torque pressure is supplied through fifth and sixth ports 326 and 328 at third-to-fourth shift valve 42 and fifth port 358 at fourth-to-fifth shift valve 44, and via fourth band valve 64 and over-drive unit valve 72, to activate fourth and seventh friction elements 58 and 70 to perform the third-to-fifth skip shifting.

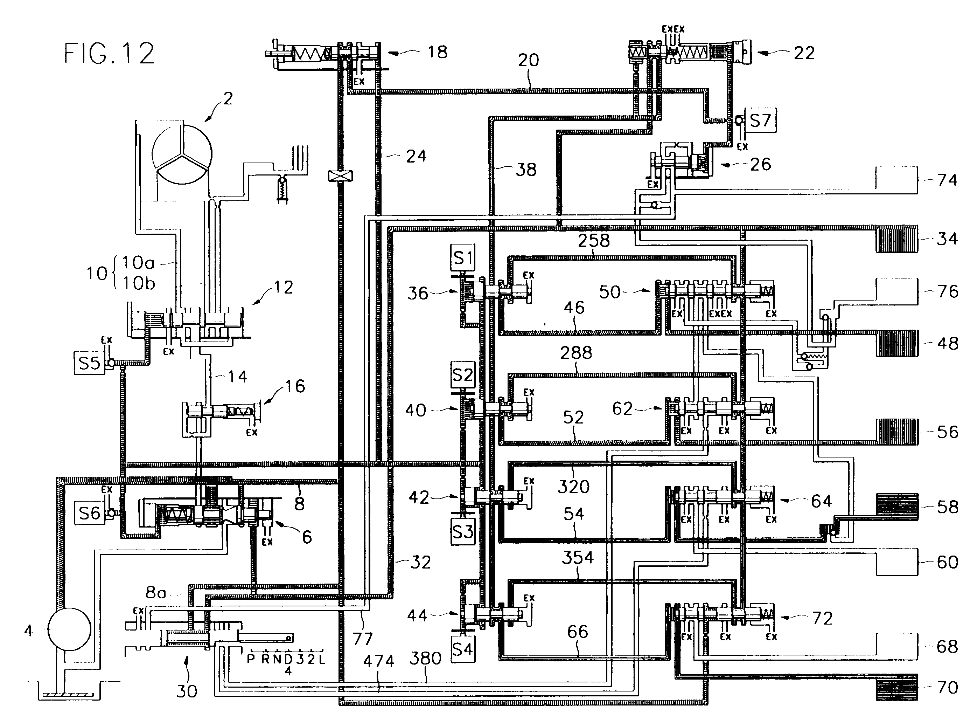

That is, sixth friction element 68 is deactivated at the third speed, and fourth and seventh friction elements 58 and 70, hatched parts in Fig. 12, are activated,

After the third-to-fifth skip shifting is performed, the TCU controls third and fourth solenoid valves S3 and S4 to the ON states and makes second, third, fourth and seventh friction elements 48, 56, 58 and 70 activated by drive pressure instead of torque pressure to establish hydraulic pressure for the fifth speed as shown in Fig. 11 and perform a driving at the fifth speed.

### [Second-to-fifth skip shifting at the "D" range]

If the accelerator pedal is pressed abruptly at the second speed, the TCU detects this, controls sixth solenoid valve S6 directly to regulate line pressure, and controls seventh solenoid valve S7 to decrease once and then increase torque pressure gradually.

Simultaneously, second, third and fourth solenoid valves S2, S3 and S4 among the solenoid valves which were controlled to the OFF states to perform the second speed driving are controlled to the ON states to exhaust hydraulic pressure in pressure chambers 300, 334 and 360 of second-to-third, third-to-fourth and fourth-to-fifth shift valves 40, 42 and 44.

By this, hydraulic pressure in pressure chambers 300, 334 and 360 are decreased, and, as spools 304, 336 and 362 are displaced leftward, torque pressure is supplied through fifth and sixth ports 326 and 328 at third-to-fourth shift valve 42 and fifth port 358 at fourth-to-fifth shift valve 44, and via fourth band valve 64 and over-drive unit valve 72, to activate fourth and seventh friction elements 58 and 70 to perform the second-to-fifth skip shifting.

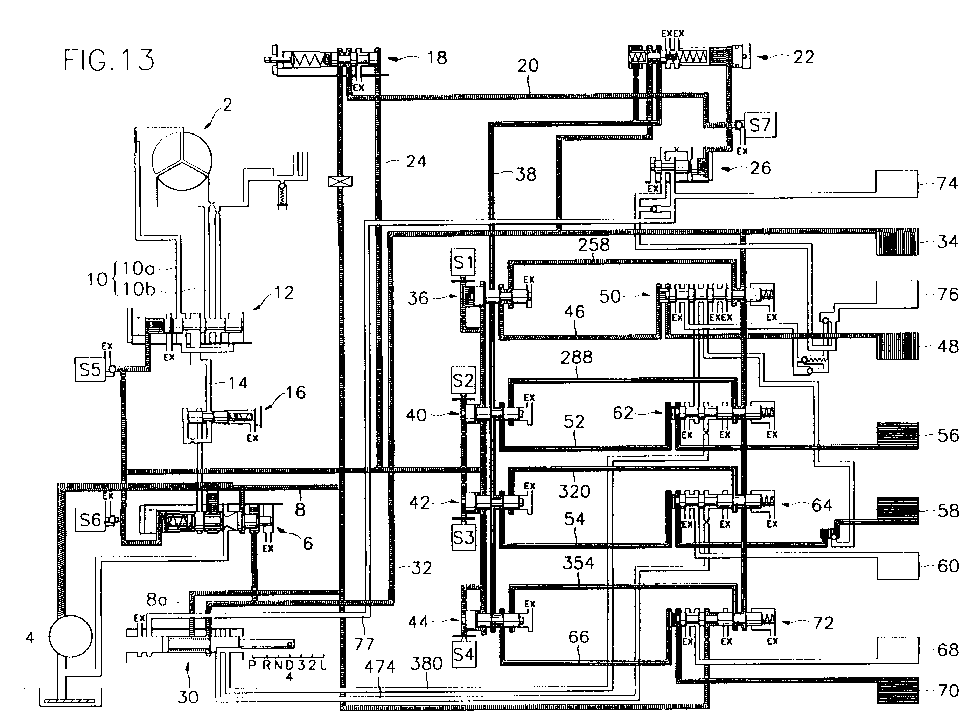

That is, sixth friction element 68 is deactivated at the second speed, and third, fourth and seventh friction elements 56, 58 and 70, hatched parts in Fig. 13, are activated.

After the second-to-fifth skip shifting is performed, the TCU controls second, third and fourth solenoid valves S2, S3 and S4 to the ON states and makes second, third, fourth and seventh friction elements 48, 56, 58 and 70 activated by drive pressure instead of torque pressure to establish hydraulic pressure for the fifth speed as shown in Fig. 11 and perform the driving at the fifth speed.

### [Second-to-fourth skip shifting at the "D" range]

If the accelerator pedal is pressed abruptly at the second speed, the TCU detects this, controls sixth solenoid valve S6 directly to regulate line pressure, and controls seventh solenoid valve S7 to decrease once and then increase torque pressure gradually.

Simultaneously, second and third solenoid valves S2 and S3 among the solenoid valves which were controlled to the OFF states to perform the second speed driving are controlled to the ON states to exhaust hydraulic pressure in pressure chambers 300 and 334 of second-to-third and third-to-fourth shift valves 40 and 42.

By this, hydraulic pressure in pressure chambers 300 and 334 are decreased, and, as spools 304 and 336 are displaced leftward, torque pressure is supplied via second-to-third and third-to-fourth shift valves 40 and 42 and though third clutch valve 62 and fourth band valve 64 to activate third and fourth friction elements 56 and 58.

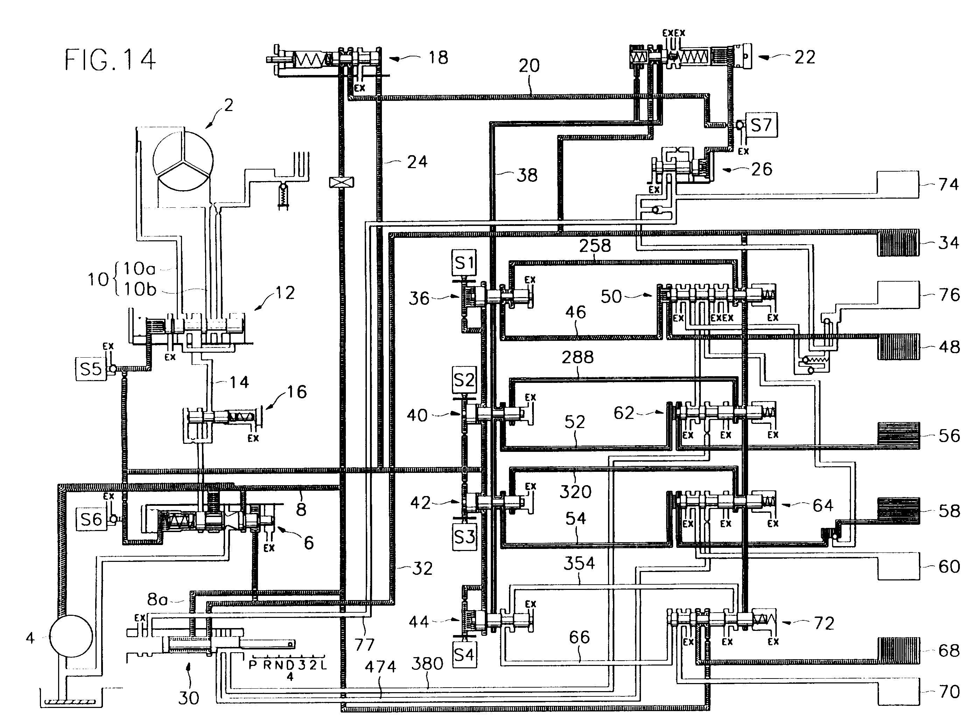

That is, first, second and sixth friction element 34, 48 and 68 are activated at the second speed, and, additionally, third and fourth friction elements 56 and 58, hatched parts in Fig. 14, are activated.

After the second-to-fourth skip shifting is performed, the TCU controls second and third solenoid valves S2 and S3 to the OFF states and makes second, third, fourth and sixth friction elements 48, 56, 58 and 68 activated by drive pressure instead of torque pressure to establish hydraulic pressure for the fourth speed as shown in Fig. 9 and perform the driving at the fourth speed.

### [First-to-fifth skip shifting at the "D" range]

If the accelerator pedal is pressed abruptly at the first speed, the TCU detects this, controls sixth solenoid valve S6 directly to regulate line pressure, and controls seventh solenoid valve S7 to increase once and then decrease torque pressure gradually.

Simultaneously, first, second, third and fourth solenoid valves S1, S2, S3 and S4 which were controlled to the OFF states to perform the first speed driving are controlled to the ON states to exhaust hydraulic pressure in pressure chambers 270, 300, 334 and 360 of first-to-second, second-to-third, third-to-fourth and fourth-to-fifth shift valves 36, 40, 42 and 44.

By this, hydraulic pressure in pressure chambers 270, 330, 334 and 360 are decreased, and spools 270, 300, 336 and 362 are displaced leftward. Torque pressure supplied through conduit 38 is supplied via each of third ports 256, 286, 318 and 352 of shift valves 36, 40, 42 and 44 to each of fifth ports 264, 292 and 326 and each of sixth ports 266, 296, 328 and 358 to activate second, third, fourth and seventh friction elements 34, 48, 56 and 70 and perform the first-to-fifth skip shifting.

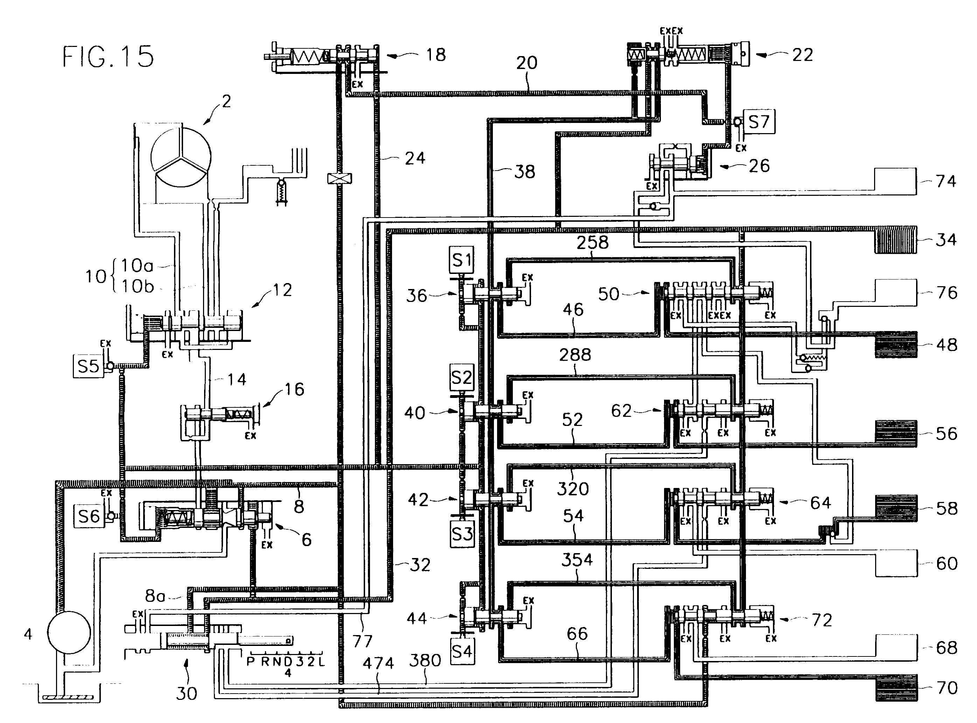

That is, sixth friction element 68 is deactivated at the first speed, and second, third and fourth and seventh friction elements 48, 56, 58 and 70, hatched parts in Fig. 15, are activated.

After the first-to-fifth skip shifting is performed, the TCU controls first, second, third and fourth solenoid valves S1, S2, S3 and S4 to the OFF states and makes second, third, fourth and seventh friction elements 48, 56, 58 and 70 activated by drive pressure instead of torque pressure to establish hydraulic pressure for the fifth speed as shown in Fig. 11 and perform the driving at the fifth speed.

### [First-to-fourth skip shifting at the "D" range]

If the accelerator pedal is pressed abruptly at the first speed, the TCU detects this, controls sixth solenoid valve S6 directly to regulate line pressure, and controls seventh solenoid valve S7 to increase once and then decrease torque pressure gradually.

Simultaneously, first, second and third solenoid valves S1, S2 and S3 among the solenoid valves which were controlled to the OFF states to perform the first speed driving are controlled to the ON states to exhaust hydraulic pressure in pressure chambers 270, 300 and 334 of first-to-second, second-to-third and third-to-fourth shift valves 36, 40 and 42.

By this, hydraulic pressure in pressure chambers 270, 300 and 334 are decreased, and spools 268, 304 and 336 are displaced leftward. Simultaneously, while control pressure supplied to fourth-to-fifth shift valve 44 is transmitted weakly according to the ON state control of first, second and third solenoid valves S1, S2 and S3, torque pressure of conduit 38 is supplied via third port 256 of first-to-second shift valve 36. As spool 268 is displaced leftward, hydraulic pressure is supplied through third port 256 and fifth and sixth ports 264 and 266. The hydraulic pressure supplied to sixth port 266 activates second friction element 48, and the hydraulic pressure supplied to fifth port 264 is supplied to third port 286 of second-to-third shift valve 40 to displace spool 304 leftward.

Leftward displacement of spool 304 makes third port 286 communicated with fifth and sixth ports 292 and 296. Hydraulic pressure supplied to sixth port 296 activates third friction element 56, and hydraulic pressure passed through fifth port 292 is supplied via fifth and sixth ports 326 and 328 of third-to-fourth shift valve 42 and fourth band valve 64 to activate fourth friction element 58 and perform the first-to-fourth skip shifting.

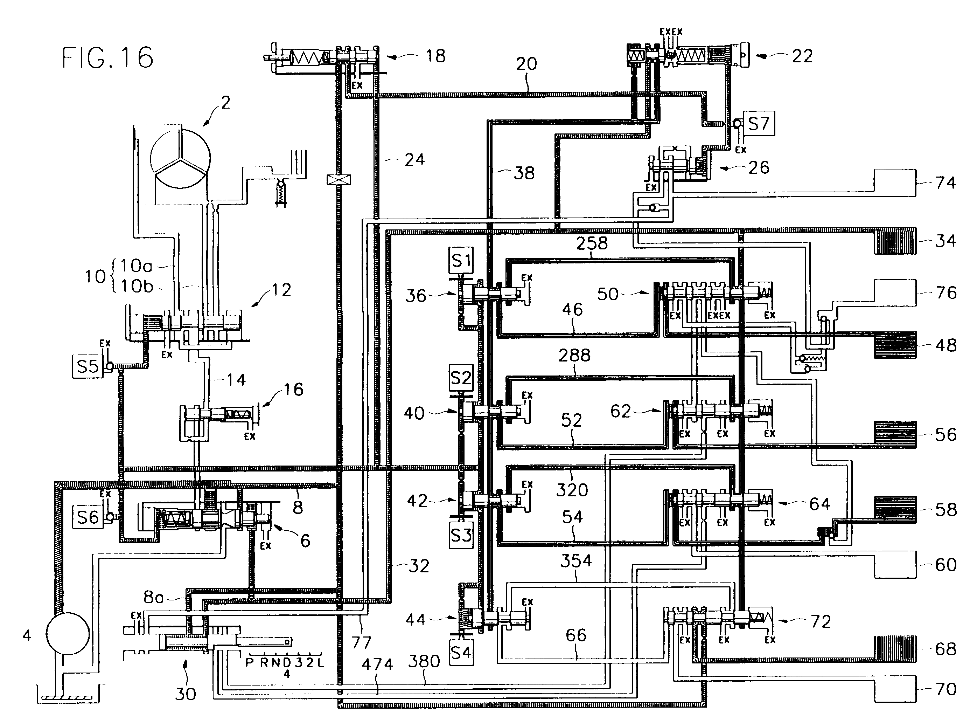

That is, second, third and fourth friction elements 48, 56 and 58, hatched parts in Fig. 16, are activated additionally at the first speed.

After the first-to-fourth skip shifting is performed, the TCU controls first, second and third solenoid valves S1, S2 and S3 to the OFF states and makes second, third and fourth friction elements 48, 56 and 58 activated by drive pressure instead of torque pressure to establish hydraulic pressure for the fourth speed as shown in Fig. 9 and perform the driving at the fourth speed.

### [First-to-third skip shifting at the "D" range]

If the accelerator pedal is pressed abruptly at the first speed, the TCU detects this, controls sixth solenoid valve S6 directly to regulate line pressure, and controls seventh solenoid valve S7 to increase once and then decrease torque pressure gradually.

Simultaneously, first and second solenoid valves S1 and S2 among the solenoid valves which were controlled to the OFF states to perform the first speed driving are controlled to the ON states to exhaust hydraulic pressure in pressure chambers 270 and 300 of first-to-second and second-to-third shift valves 36 and 40.

By this, hydraulic pressure in pressure chambers 270 and 300 are decreased, and spools 268 and 304 are displaced leftward to make torque pressure in conduit 38 supplied through third port 256 of first-to-second shift valve 36. As spool 268 is displaced leftward, hydraulic pressure is supplied through third, fifth and sixth ports 256, 264 and 266 to sixth port 266 to activate second friction element 48, and hydraulic pressure supplied through fifth port 264 is supplied to third port 286 of second-to-third shift valve 40 to displace spool 304 leftward.

Leftward displacement of spool 304 makes third port 286 communicated with fifth and sixth ports 292 and 296. Hydraulic pressure supplied to sixth port 296 activates third friction element 56 to perform the first-to-third skip shifting.

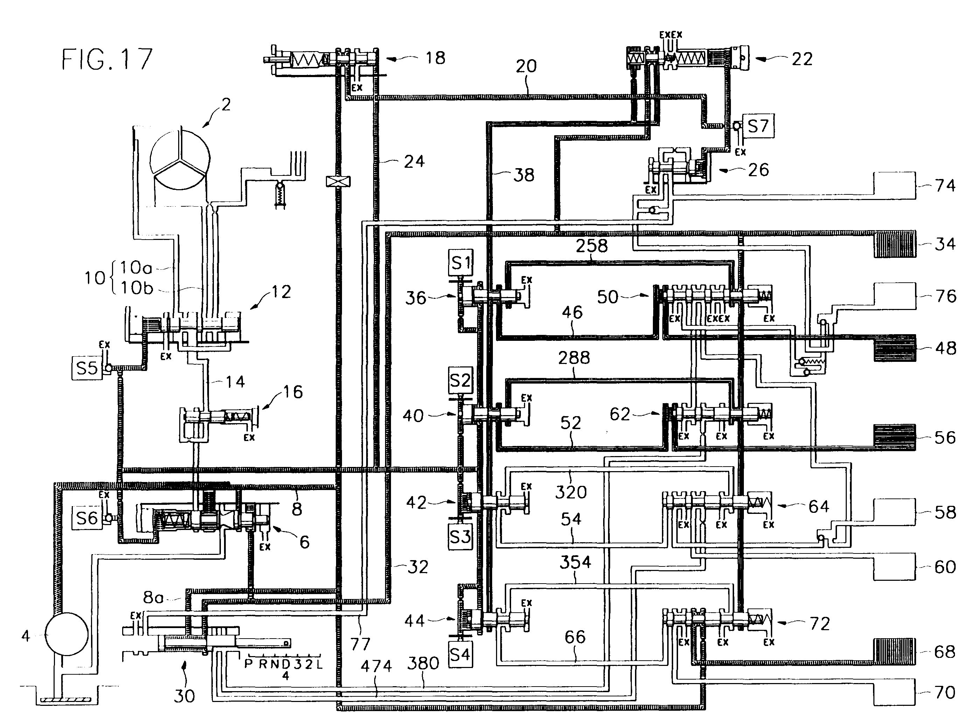

That is, second and third friction elements 48 and 56, hatched parts in Fig. 17, are activated additionally at the first speed.

After the first-to-third skip shifting is performed, the TCU controls first and second solenoid valves S1 and S2 to the OFF states and makes second and third friction elements 48 and 56 activated by drive pressure instead of torque pressure to establish hydraulic pressure for the third speed as shown in Fig. 7 and perform the driving at the third speed.

### [Reverse range]

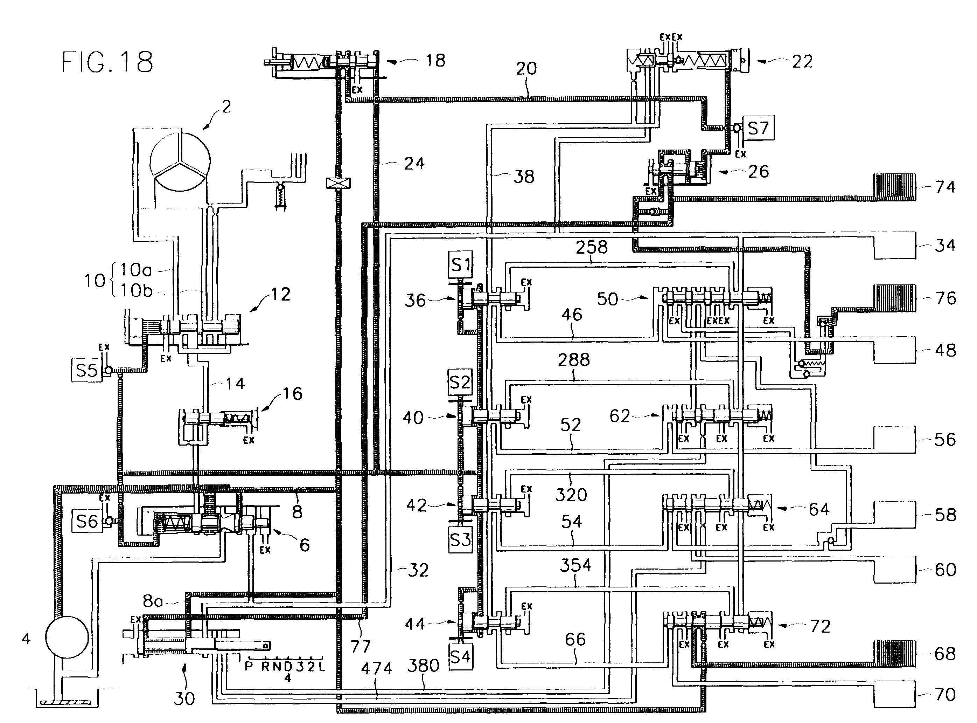

When the shift lever is positioned at a reverse mode, line pressure in conduit 8a supplied to manual valve 30 is transmitted to reverse conduit 77, and drive pressure transmitted toward drive pressure conduit 32 is obstructed as shown in Fig. 18.

Under this state, drive pressure supplied to first shift control section D is obstructed, reverse pressure flowing along reverse conduit 77 is transmitted to eighth friction element 74, a reverse friction element, directly to activate the same.

At this moment, the TCU controls seventh solenoid valve S7 to an OFF state, and hydraulic pressure transmitted via conduit 8 and decreased by solenoid supply valve 18 is supplied to pressure chamber 434 of reverse clutch inhibiter valve 26 and applied to a right face of first land 436 of spool 432.

Accordingly, spool 432 of reverse clutch inhibiter valve 26 is displaced leftward, and first port 420 become communicated with second port 422 such that a portion of pressurized fluid transmitted to reverse conduit 77 can be supplied toward conduit 416 through second port 422.

Reverse pressure flowing through conduit 416 activates ninth friction element 76 via shuttle valve 418.

A portion of pressurized fluid supplied to conduit 8a is supplied via second and third ports 516 and 520 of over-drive unit valve 72 to activate seventh friction element 70, and, accordingly, a reverse driving can be performed in a state as shown in Fig. 18.

### [Parking range]

When the shift lever is positioned at a parking mode, line pressure in conduit 8a supplied to manual valve 30 is obstructed that it can not flow through drive pressure conduit 32 or reverse pressure conduit 77, and the line pressure is exhausted at manual valve 30 completely.

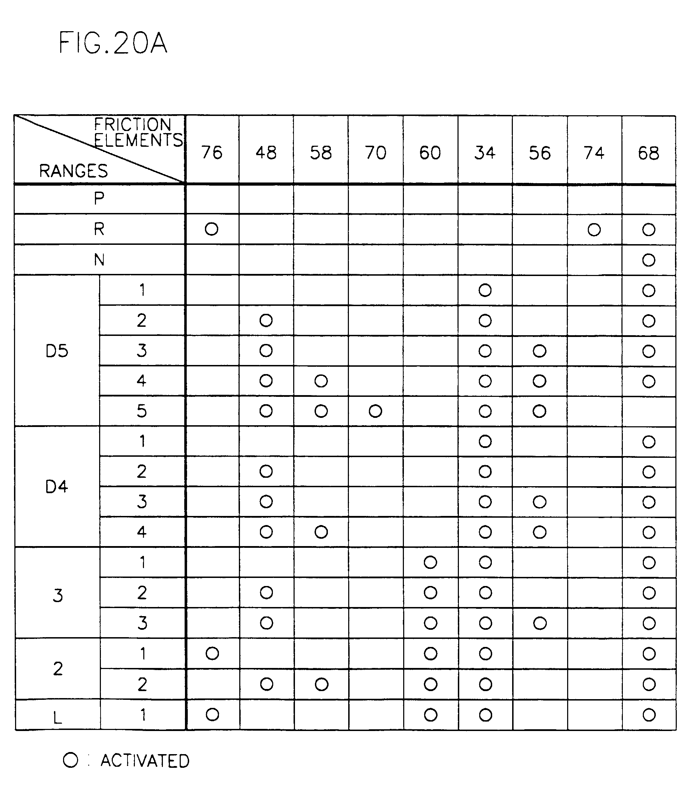

As described above, in the automatic transmission system for automotive vehicle according to the present invention, an over-drive switch can be OFF-controlled or ON-controlled to constitute a four-speed transmission system or a five-speed transmission system, respectively. By switching the over-drive switch to an OFF state, line pressure from manual valve 30 flows through conduit 426 and a portion of pressurized fluid flows along drive pressure conduit 32 such that each of the friction elements are activated to perform speed shifting according to the operation of the TCU as shown in Fig. 20A.

That is, first, fifth and sixth friction elements 34, 60 and 68 are activated at the first speed of the "3" range; first, second, fifth and sixth friction elements 34, 48, 60 and 68 are activated at the second speed of the "3" range; and first, second, third, fifth and sixth friction elements 34, 48, 56, 60 and 68 are activated at the second speed of the "3" range to perform the speed shifting until the third speed automatically.

Also by selecting the "2" range of the shift lever, line pressure from manual valve 30 flows through conduit 474. As drive pressure is supplied to first and second shift control sections D and E, first, fifth, sixth and ninth friction elements 34, 60, 68 and 76 are activated at the first speed; and first, second, fourth, fifth and sixth friction elements 34, 48, 58, 60 and 68 are activated at the second speed to perform the speed shifting until the second speed automatically.

Also, while the vehicle is driven at the first speed only when the "L" range is selected by the shift lever, at this moment, friction elements are activated same as at the first speed of the "2" range.

According to the present invention, it is not only possible to perform automatic speed shifting controlled by the TCU, but also possible to perform a speed shifting operation equivalent to a manual speed shifting operation performed by a driver by selecting the shift lever from the "L" range to the "D" range.

When the TCU is not operating regularly, the transmission system maintains the present speed stage; and when the engine is started again, it maintains the first speed stage.

On the other hand, when the driver makes an error that the shift lever is selected to the reverse range while driving in the "D" range, as an emergency safety means, seventh solenoid valve S7 is controlled to the ON state by the TCU.

As seventh solenoid valve S7 is controlled to the ON state, hydraulic pressure in pressure chamber 434 of reverse clutch inhibiter valve 26 is exhausted. A portion of pressurized fluid supplied from reverse pressure conduit 77 through first port 420 of reverse clutch inhibiter valve 26 is supplied via bypass conduit 424 to fourth port 428 to apply on the left face of second land 438 and displace 432 rightward.

As a result, third land 440 obstructs second port 422 and supply of hydraulic pressure toward conduit 416 is obstructed, such that hydraulic pressure is not supplied to activate ninth friction element 76, and, therefore, the vehicle is not driven rearward even though the shift lever is selected to the "R" range.

Fig. 20A illustrates which friction elements are activated at each shift stage in the hydraulic control system according to the invention.

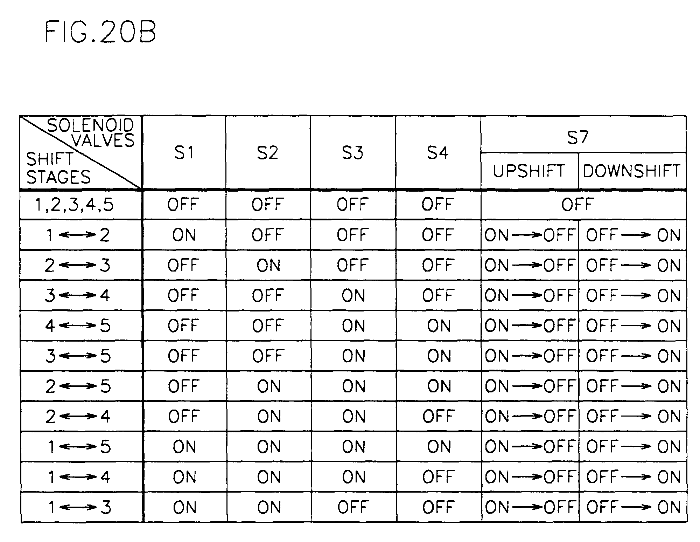

Fig. 20B illustrates how solenoid valves are operated at each shift stage in the hydraulic control system according to the invention. When shifting speed, first, second, third and fourth solenoid valves S1, S2, S3 and S4 are controlled to ON/OFF states by the TCU. When shifting up, seventh solenoid valve S7 is controlled to the ON state initially and then to the OFF state gradually. On the contrary, when shifting down, seventh solenoid valve S7 is controlled to the OFF state initially and then to the ON state gradually, and, when the speed shifting is completed, seventh solenoid valve S7 is controlled to the ON state.

As described above, in the automatic transmission system according to the invention, the power transmission efficiency can be improved and the shock caused during speed shifting can be reduced because the line pressure can be controlled to the levels required for each speed stage; the response is prompt because the speed shifting is performed by the torque pressure firstly and by the drive pressure secondly and also the skip shifting is performed; an emergency safety means is provided to prevent the vehicle from being driven rearward when the reverse range is selected in error during driving forward; a manual speed shifting operation can be performed at drivers's choice; and, also, the shock caused during speed shifting can be further reduced because the transmission can perform five forward speeds.

## Claims

1. An automatic transmission for an automotive vehicle comprising:
- a hydraulic pump (4), driven by an engine, for pressurizing fluid;
- a pressure regulating valve (6) for varying hydraulic pressure supplied from the hydraulic pump (4) when driving the vehicle forward or rearward;
- a torque converter (2) for transmitting power of the engine to an input shaft of the transmission;
- a converter clutch regulator valve (12) for activating a damper clutch to improve a transmission efficiency of the torque converter (2);
- a solenoid supply valve (18) for receiving line pressure from the pressure regulating valve (6) and supplying reduced pressure to first, second, third, fourth, fifth, sixth and seventh solenoid valves (S1, S2, S3, S4, S5, S6, S7);
- a first friction element (34) commonly activated at each speed stage;
- second, third, fourth, fifth, sixth, seventh, eighth and ninth friction elements (48, 56, 58, 60, 68, 70, 74, 76), at least one of which is activated according to the speed stages;
- a torque control regulator valve (22) for supplying torque pressure required to activate the friction elements (48, 56, 58, 60, 68, 70, 74, 76);
- a manual valve (30);
- first-to-second, second-to-third, third-to-fourth and fourth-to-fifth speed shift valves (36, 40, 42, 44) for selectively supplying hydraulic pressure to the friction elements according to ON/OFF operations of solenoid valves to shift speed; and
- second and third speed clutch valves (50, 62), a fourth band valve 64 and an over-drive unit valve (72) controlled by the torque pressure for supplying activating pressure to the friction elements (48, 56, 58, 60, 68, 70, 74, 76) of the respective speed stages and supplying the activating pressure of next speed stages to the shift valves (36, 40, 42, 44), wherein the manual valve (30) supplies the line pressure regulated by the pressure regulating valve (6) according to a position of a shift lever to the torque control regulator valve (22), the clutch valves and the band valve or to the first and sixth friction elements;
**characterized in that**,
- said first-to-second, second-to-third, third-to-fourth and fourth-to-fifth speed valves (36, 40, 42, 44) are controlled by the ON/OFF operations of said first, second, third and fourth solenoid valves (S 1, S2, S3, S4) to selectively supply the torque pressure supplied from the torque control regulator valve (22) first to the friction elements to shift speed and than drive pressure regulated by the pressure regulating valves (6) and supplied from the manual valve (30) to maintain the speed stage.

2. The automatic transmission as claimed in claim 1, **characterized in that** the eighth friction element is a reverse friction element (74) connected to the manual valve (30) via a reverse pressure conduit (77) directly to receive hydraulic pressure therefrom.

3. The automatic transmission as claimed in claim 1, **characterized in that** a reverse clutch inhibiter valve (26) for keeping the vehicle from driving rearward when a reverse range is selected at a drive range to obstruct supply of hydraulic pressure to the ninth friction element (76) is disposed in a reverse pressure conduit (77) through which hydraulic pressure is supplied to the eighth friction element (74) to provide an emergency safety means.

4. The automatic transmission as claimed in claim 1, **characterized in that** the torque control regulator valve (22) comprises:
- a pressure chamber (220) for receiving hydraulic pressure controlled by the seventh solenoid valve (S7);
- a first spool (232) for selectively obstructing the torque pressure supplied to the first-to-second shift valve (36);
- a second spool (234) to which pressure in the pressure chamber (220) is applied;
- a first elastic member (242) for biasing the first spool (232); and
- a second elastic member (244) disposed between the first spool (232) and the second spool (234) to support the first and second spools elastically , said second elastic member (244) exerting an elastic force bigger than that of the first elastic member (242).

5. The automatic transmission as claimed in claim 1, **characterized in that** the first-to-second shift valve (36) comprises:
- first and second ports (252, 254) for receiving control pressure from the second-to-third shift valve (40);
- a third port (256) for receiving the torque pressure from a torque pressure conduit (38);
- a fourth port (260) for receiving the drive pressure from the second clutch valve (50);
- a fifth port (264) for transmitting the torque pressure to the second-to-third shift valve (40);
- a sixth port (266) for transmitting the torque pressure or a drive pressure to the second clutch valve (50) selectively; and
- a spool (268) for opening or closing the ports according to a variation of pressure in a pressure chamber controlled by the first solenoid valve (S1).

6. The automatic transmission as claimed in claim 1, **characterized in that** the second-to-third shift valve (40) comprises:
- first and second ports (282, 284) connected to branch conduits (278, 280) of a control conduit (24);
- a third port (286) for receiving the torque pressure from the first to second shift valve (36);
- a fourth port (290) for receiving drive pressure from the third clutch valve (62);
- a fifth port (292) for transmitting the torque pressure to the third-to-fourth shift valve (40);
- a sixth port (296) for transmitting the torque pressure or the drive pressure to a third clutch valve (62), selectively;
- a seventh port (298) for transmitting control pressure to the first-to-second shift valve (36); and
- a spool (304) for opening or closing the ports according to a variation of pressure in a pressure chamber controlled by the second solenoid valve (S2).

7. The automatic transmission as claimed in claim 1, **characterized in that** the third-to-fourth shift valve (42) comprises:
- first and second ports (314, 316) connected to branch conduits (310, 312) of the control conduit (24);
- a third port (318) for receiving the torque pressure from the second-to-third shift valve (40);
- a fourth port (322) for receiving drive pressure from the fourth band valve (64);
- a fifth port (326) for transmitting the torque pressure to the fourth-to-fifth shift valve (44);
- a sixth port (328) for transmitting the torque pressure or the drive pressure to the fourth band valve (64);
- a seventh port (326) for transmitting control pressure to the fourth-to-fifth shift valve; and
- a spool (336) for opening or closing the ports according to a variation of pressure in a pressure chamber controlled by the third solenoid valve (S3).

8. The automatic transmission as claimed in claim 1, **characterized in that** the fourth-to-fifth shift valve (44) comprised:
- first and second ports (348, 350) connected to branch conduits (344, 346) of the control conduit (330);
- a third port (352) for receiving the torque pressure from the third-to-fourth shift valve (42);
- a fourth port (356) for receiving drive pressure from the overdrive unit valve (72);
- a fifth port (358) for transmitting the torque pressure or the drive pressure to the overdrive unit valve (72); and
- a spool (446) for opening or closing the ports according to a variation of pressure in a pressure chamber controlled by the fourth solenoid valve (S4).

9. The automatic transmission as claimed in claim 1, **characterized in that** the manual valve (30) has modes for "P", "R", "N", "D", "3", "2" and "L" ranges.

10. The automatic transmission as claimed in claim 9, **characterized in that** the manual valve (30) can be shifted to "D", "3", "2" and "L" ranges manually.

11. The automatic transmission as claimed in claim 10, **characterized in that** drive pressure supplied to the first and sixth friction elements directly at a first speed of the "D" range.

12. The automatic transmission as claimed in claim 10, **characterized in that** the first solenoid valve (S1) for controlling the first-to-second shift valve (36) is controlled to an OFF state to supply the drive pressure to friction elements which are activated at a first speed stage and to a second friction element (48) at a second speed of the "D" range.

13. The automatic transmission as claimed in claim 10, **characterized in that** the second solenoid valve (S2) for controlling the second-to-third shift valve (40) is controlled to an OFF state to supply the drive pressure to friction elements which are activated at a second speed stage and to a third friction element (56) at a third speed of the "D" range.

14. The automatic transmission as claimed in claim 10, **characterized in that** the third solenoid valve (S3) for controlling the third-to-fourth shift valve (42) is controlled to an OFF state to supply the drive pressure to friction elements which are activated at a third speed stage and to a fourth friction element (58) at a fourth speed of the "D" range.

15. The automatic transmission as claimed in claim 10, **characterized in that** the fourth solenoid valve (S4) for controlling the fourth-to-fifth shift valve (44) is controlled to an OFF state to obstruct hydraulic pressure supplied to the sixth friction element (68) and to supply the drive pressure to friction elements which are activated at a fourth speed stage and to a seventh friction element (70) at a fifth speed of the "D" range.

16. The automatic transmission as claimed in claim 10, **characterized in that** the first and second solenoid valves (S1, S2) are controlled to OFF states and the third and fourth solenoid valves (S3, S4) are controlled to ON states to enable a third-to-fourth skip shifting at the "D" range.

17. The automatic transmission as claimed in claim 11, **characterized in that** the first solenoid valve (S1) is controlled to an OFF state and the second, third and fourth solenoid valves (S1, S2, S3) are controlled to ON states to enable a second-to-fifth skip shifting at the "D" range.

18. The automatic transmission as claimed in claim 10, **characterized in that** the first and fourth solenoid valves (S1, S4) are controlled to OFF states and the second and third solenoid valves are controlled to ON states to enable a second-to-fourth skip shifting at the "D" range.

19. The automatic transmission as claimed in claim 11, **characterized in that** the first, second, third and fourth solenoid valves (S1, S2, S3, S4) are controlled to ON states to enable first-to-fifth skip shifting at the "D" range.

20. The automatic transmission as claimed in claim 10, characterized **in that** wherein the first, second and third solenoid valves (S1, S2, S3) are controlled to ON states and the fourth solenoid valve is controlled to an OFF state to enable first-to-fourth skip shifting at the "D" range.

21. The automatic transmission as claimed in claim 11, **characterized in that** the first and second solenoid valves are controlled to ON states and the third and fourth solenoid valves (S3, S4) are controlled to OFF states to enable a first-to-third skip shifting at the "D" range.

22. The automatic transmission as claimed in claim 1, **characterized in that** the solenoid supply valve (18) has a spool (200), an elastic member (202) for biasing the spool (200) to regulate hydraulic pressure supplied from the solenoid supply valve (18), and a screw (206) for compressing or releasing the elastic member (202).

## Patentansprüche

1. Automatikgetriebe für ein Kraftfahrzeug, mit:
- einer Hydraulikpumpe (4), die durch einen Motor angetrieben wird, um Fluid mit Druck zu beaufschlagen;
- einem Druckregulierventil (6) zum Ändern des von der Hydraulikpumpe (4) angelegten Hydraulikdrucks, wenn das Fahrzeug vorwärts oder rückwärts angetrieben wird;
- einem Drehmomentwandler (2) zum Übertragen von Leistung vom Motor an eine Antriebswelle des Getriebes;
- einem Wandlerkupplung-Regulierventil (12) zum Aktivieren einer Dämpferkupplung, um den Übertragungswirkungsgrad des Drehmomentwandlers (2) zu verbessern;
- einem elektromagnetischen Versorgungsventil (18), das den Leitungsdruck vom Druckregulierventil (6) empfängt und einen verringerten Druck an erste, zweite, dritte, vierte, fünfte, sechste und siebte Magnetventile (S1, S2, S3, S4, S5, S6, S7) zu liefern;
- einem ersten Reibelement (34), das im allgemeinen auf jeder Schaltstufe aktiviert wird;
- zweiten, dritten, vierten, fünften, sechsten, siebten, achten und neunten Reibelementen (48, 56, 58, 60, 68, 70, 74, 76), wovon wenigstens eines entsprechend den Schaltstufen aktiviert wird;
- einem Drehmomentsteuerung-Regulierventil (22) zum Anlegen eines Drehmomentdrucks, der zum Aktivieren der Reibelemente (48, 56, 58, 60, 68, 70, 74, 76) erforderlich ist;
- einem manuellen Ventil (30);
- Erster/Zweiter-, Zweiter/Dritter-, Dritter/Vierter- und Vierter/Fünfter-Gang-Schaltventilen (36, 40, 42, 44) zum wahlweisen Anlegen von Hydraulikdruck an die Reibelemente entsprechend den EIN/AUS-Operationen von Gangschalt-Magnetventilen; und
- Zweiter-Gang- und Dritter-Gang-Kupplungsventilen (50, 62), einem Vierter-Gang-Bandventil (64) und einem Schongangeinheit-Ventil (72), die durch den Drehmomentdruck gesteuert werden, um an die Reibelemente (48, 56, 58, 60, 68, 70, 74, 76) der jeweiligen Schaltstufen einen Aktivierungsdruck anzulegen und den Aktivierungsdruck der nächsten Schaltstufen an die Schaltventile (36, 40, 42, 44) anzulegen, wobei das manuelle Ventil (30) den durch das Druckregulierventil (6) regulierten Leitungsdruck entsprechend einer Stellung eines Schalthebels an das Drehmomentsteuerung-Regulierventil (22), die Kupplungsventile und das Bandventil oder an die ersten und sechsten Reibelemente liefert;
**dadurch gekennzeichnet, daß**
- die Erster/Zweiter-, Zweiter/Dritter-, Dritter/Vierter- und Vierter/Fünfter-Gang-Schaltventile (36, 40, 42, 44) durch die EIN/AUS-Operationen der ersten, zweiten, dritten und vierten Magnetventile (S1, S2, S3, S4) gesteuert werden, um wahlweise den vom Drehmomentsteuerung-Regulierventil (22) gelieferten Drehmomentdruck zunächst an die Reibelemente zum Schalten und dann den Antriebsdruck, der durch die Druckregulierventile (6) reguliert und vom manuellen Ventil (30) geliefert wird, anzulegen, um die Schaltstufe beizubehalten.

2. Automatikgetriebe nach Anspruch 1, **dadurch gekennzeichnet, daß** das achte Reibelement ein Umkehrreibelement (74) ist, das mit dem manuellen Ventil (30) über eine Umkehrdruckleitung (77) verbunden ist, um von dieser direkt Hydraulikdruck zu empfangen.

3. Automatikgetriebe nach Anspruch 1, **dadurch gekennzeichnet, daß** ein Umkehrkupplung-Sperrventil (26), das verhindert, daß das Fahrzeug rückwärts fährt, wenn in einem Fahrbereich ein Rückwärtsbereich gewählt wird, indem es die Zufuhr von Hydraulikdruck an das neunte Reibelement (76) verhindert, in einer Umkehrdruckleitung (77) angeordnet ist, durch die Hydraulikdruck an das achte Reibelement (74) angelegt wird, um eine Notfallsicherheitseinrichtung zu schaffen.

4. Automatikgetriebe nach Anspruch 1, **dadurch gekennzeichnet, daß** das Drehmomentsteuerung-Regulierventil (22) umfaßt:
- eine Druckkammer (220) für die Aufnahme von Hydraulikdruck, der durch das siebte Magnetventil (S7) gesteuert wird;
- einen ersten Schieber (232) zum wahlweisen Sperren des an das Erster/Zweiter-Gang-Schaltventil (36) angelegten Drehmomentdrucks;
- einen zweiten Schieber (234), an den der Druck in der Druckkammer (220) angelegt wird;
- ein erstes elastisches Element (242) zum Vorbelasten des ersten Schiebers (232); und
- ein zweites elastisches Element (244), das zwischen dem ersten Schieber (232) und dem zweiten Schieber (234) angeordnet ist, um die ersten und zweiten Schieber elastisch zu unterstützen, wobei das elastische Element (244) eine elastische Kraft ausübt, die größer als diejenige des ersten elastischen Elements (244) ist.

5. Automatikgetriebe nach Anspruch 1, **dadurch gekennzeichnet, daß** das Erster/Zweiter-Gang-Schaltventil (36) umfaßt:
- erste und zweite Anschlüsse (252, 254) zum Empfangen eines Steuerdrucks vom Zweiter/Dritter-Gang-Schaltventil (40);
- einen dritten Anschluß (256) zum Empfangen des Drehmomentdrucks von einer Drehmomentdruckleitung (38);
- einen vierten Anschluß (260) zum Empfangen des Antriebsdrucks vom zweiten Kupplungsventil (50);
- einen fünften Anschluß (264) zum Übertragen des Drehmomentdrucks an das Zweiter/Dritter-Gang-Schaltventil (40);
- einen sechsten Anschluß (266) zum wahlweisen Übertragen des Drehmomentdrucks oder eines Antriebsdrucks an das zweite Kupplungsventil (50); und
- einen Schieber (268) zum Öffnen oder Schließen der Anschlüsse entsprechend einer Druckänderung in einer Druckkammer, die durch das erste Magnetventil (S1) gesteuert wird.

6. Automatikgetriebe nach Anspruch 1, **dadurch gekennzeichnet, daß** das Zweiter/Dritter-Gang-Schaltventil (40) umfaßt:
- einen ersten und einen zweiten Anschluß (282, 284), die mit Verzweigungsleitungen (278, 280) einer Steuerleitung (24) verbunden sind;
- einen dritten Anschluß (286) zum Empfangen des Drehmomentdrucks vom Erster/Zweiter-Gang-Schaltventil (36);
- einen vierten Anschluß (290) zum Empfangen des Antriebsdrucks vom dritten Kupplungsventil (62);
- einen fünften Anschluß (292) zum Übertragen des Drehmomentdrucks an das Dritter/Vierter-Gang-Schaltventil (40);
- einen sechsten Anschluß (296) zum wahlweisen Übertragen des Drehmomentdrucks oder des Antriebsdrucks an ein drittes Kupplungsventil (62);
- einen siebten Anschluß (298) zum Übertragen eines Steuerdrucks an das Erster/Zweiter-Gang-Schaltventil (36); und
- einen Schieber (304) zum Öffnen oder Schließen der Anschlüsse entsprechend einer Druckänderung in einer Druckkammer, die durch das zweite Magnetventil (S2) gesteuert wird.

7. Automatikgetriebe nach Anspruch 1, **dadurch gekennzeichnet, daß** das Dritter/Vierter-Gang-Schaltventil (42) umfaßt:
- einen ersten und einen zweiten Anschluß (314, 316), die mit Verzweigungsleitungen (310, 312) der Steuerleitung (24) verbunden sind;
- einen dritten Anschluß (318) zum Empfangen des Drehmomentdrucks vom Zweiter/Dritter-Gang-Schaltventil (40);
- einen vierten Anschluß (323) zum Empfangen eines Antriebsdrucks vom vierten Bandventil (64);
- einen fünften Anschluß (326) zum Übertragen des Drehmomentdrucks an das Vierter/Fünfter-Gang-Schaltventil (44);
- einen sechsten Anschluß (328) zum Übertragen des Drehmomentdrucks oder des Antriebsdrucks an das vierte Bandventil (64);
- einen siebten Anschluß (326) zum Übertragen des Steuerdrucks an das Vierter/Fünfter-Gang-Schaltventil; und
- einen Schieber (336) zum Öffnen oder Schließen der Anschlüsse entsprechend einer Druckänderung in einer Druckkammer, die durch das dritte Magnetventil (S3) gesteuert wird.

8. Automatikgetriebe nach Anspruch 1, **dadurch gekennzeichnet, daß** das Vierter/Fünfter-Gang-Schaltventil (44) umfaßt:
- einen ersten und einen zweiten Anschluß (348, 350), die mit Verzweigungsleitungen (344, 346) der Steuerleitung (330) verbunden sind;
- einen dritten Anschluß (352) zum Empfangen des Drehmomentdrucks vom Dritter/Vierter-Gang-Schaltventil (42);
- einen vierten Anschluß (356) zum Empfangen eines Antriebsdrucks von dem Schongangeinheit-Ventil (72);
- einen fünften Anschluß (358) zum Übertragen des Drehmomentdrucks oder des Antriebsdrucks an das Schongangeinheit-Ventil (72); und
- einen Schieber (446) zum Öffnen oder Schließen der Anschlüsse entsprechend einer Druckänderung in einer Druckkammer, die durch das vierte Magnetventil (S4) gesteuert wird.

9. Automatikgetriebe nach Anspruch 1, **dadurch gekennzeichnet, daß** das manuelle Ventil (30) Betriebsarten für "P"-, "R"-, "N"-, "D"-, "3"-, "2"- und "L"-Bereiche besitzt.

10. Automatikgetriebe nach Anspruch 9, **dadurch gekennzeichnet, daß** das manuelle Ventil (30) manuell in "D"-, "3"-, "2"- und "L"-Bereiche geschoben werden kann.

11. Automatikgetriebe nach Anspruch 10, **dadurch gekennzeichnet, daß** der Antriebsdruck auf der ersten Schaltstufe des "D"-Bereichs direkt an das erste und an das sechste Reibelement angelegt wird.

12. Automatikgetriebe nach Anspruch 10, **dadurch gekennzeichnet, daß** das erste Magnetventil (S1) zum Steuern des Erster/Zweiter-Gang-Schaltventils (36) in einen AUS-Zustand gesteuert wird, um den Antriebsdruck an Reibelemente anzulegen, die auf einer Schaltstufe aktiviert werden, und an ein zweites Reibelement (48) auf einer zweiten Schaltstufe des "D"-Bereichs anzulegen.

13. Automatikgetriebe nach Anspruch 10, **dadurch gekennzeichnet, daß** das zweite Magnetventil (S2) zum Steuern des Zweiter/Dritter-Gang-Schaltventils (40) in einen AUS-Zustand gesteuert wird, um den Antriebsdruck an Reibelemente anzulegen, die auf einer zweiten Schaltstufe aktiviert werden, und an ein drittes Reibelement (56) auf einer dritten Schaltstufe des "D"-Bereichs anzulegen.

14. Automatikgetriebe nach Anspruch 10, **dadurch gekennzeichnet, daß** das dritte Magnetventil (S3) zum Steuern des Dritter/Vierter-Gang-Schaltventils (42) in einen AUS-Zustand gesteuert wird, um den Antriebsdruck an Reibelemente anzulegen, die auf einer dritten Schaltstufe aktiviert werden, und an ein viertes Reibelement (58) auf einer vierten Schaltstufe des "D"-Bereichs anzulegen.

15. Automatikgetriebe nach Anspruch 10, **dadurch gekennzeichnet, daß** das vierte Magnetventil (S4) zum Steuern des Vierter/Fünfter-Gang-Schaltventils (44) in einen AUS-Zustand gesteuert wird, um das Anlegen von Hydraulikdruck an das sechste Reibelement (68) zu sperren und den Antriebsdruck an Reibelemente anzulegen, die auf einer vierten Schaltstufe aktiviert werden, und an ein siebtes Reibelement (70) auf einer fünften Schaltstufe des "D"-Bereichs anzulegen.

16. Automatikgetriebe nach Anspruch 10, **dadurch gekennzeichnet, daß** die ersten und zweiten Magnetventile (S1, S2) in AUS-Zustände gesteuert werden und die dritten und vierten Magnetventile (S3, S4) in EIN-Zustände gesteuert werden, um im "D"-Bereich ein Dritter/Vierter-Gang-Sprungschalten zu ermöglichen.

17. Automatikgetriebe nach Anspruch 11, **dadurch gekennzeichnet, daß** das erste Magnetventil (S1) in einen AUS-Zustand gesteuert wird und die zweiten, dritten und vierten Magnetventile (S1, S2, S3) in EIN-Zustände gesteuert werden, um im "D"-Bereich ein Zweiter/Fünfter-Gang-Sprungschalten zu ermöglichen.

18. Automatikgetriebe nach Anspruch 10, **dadurch gekennzeichnet, daß** die ersten und vierten Magnetventile (S1, S4) in AUS-Zustände gesteuert werden und die zweiten und dritten Magnetventile in EIN-Zustände gesteuert werden, um im "D"-Bereich ein Zweiter/Vierter-Gang-Sprungschalten zu ermöglichen.

19. Automatikgetriebe nach Anspruch 11, **dadurch gekennzeichnet, daß** die ersten, zweiten, dritten und vierten Magnetventile (S1, S2, S3, S4) in EIN-Zustände gesteuert werden, um im "D"-Bereich ein Erster/Fünfter-Gang-Sprungschalten zu ermöglichen.

20. Automatikgetriebe nach Anspruch 10, **dadurch gekennzeichnet, daß** die ersten, zweiten und dritten Magnetventile (S1, S2, S3) in EIN-Zustände gesteuert werden und das vierte Magnetventil in einen AUS-Zustand gesteuert wird, um im "D"-Bereich ein Erster/Vierter-Gang-Sprungschalten zu ermöglichen.

21. Automatikgetriebe nach Anspruch 1, **dadurch gekennzeichnet, daß** die ersten und zweiten Magnetventile in EIN-Zustände gesteuert werden und die dritten und vierten Magnetventile (S3, S4) in AUS-Zustände gesteuert werden, um im "D"-Bereich ein Erster/Dritter-Gang-Sprungschalten zu ermöglichen.

22. Automatikgetriebe nach Anspruch 1, **dadurch gekennzeichnet, daß** das Versorgungs-Magnetventil (18) einen Schieber (200), ein elastisches Element (202) zum Vorbelasten des Schiebers (200) für die Regulierung des vom Versorgungs-Magnetventil (18) gelieferten Hydraulikdrucks sowie eine Schraube (206) zum Komprimieren oder Entlasten des elastischen Elements (202) besitzt.

## Revendications

1. Une transmission automatique pour un véhicule automobile, comprenant :
- une pompe hydraulique (4) entraînée par un moteur, pour mettre du fluide sous pression ;
- une valve de régulation de pression (6), pour moduler la pression hydraulique fournie depuis la pompe hydraulique (4) lors de l'entraînement du véhicule en marche avant ou arrière ;
- un convertisseur de couple (2) pour transmettre la puissance du moteur à un arbre d'entrée de la transmission ;
- une valve de régulateur d'embrayage de convertisseur (12) pour activer un embrayage amortisseur afin d'améliorer le rendement de transmission du convertisseur de couple (2);
- une électrovalve d'alimentation (18) pour recevoir la pression de circuit de la valve de régulation de pression (6) et fournir une pression réduite à des première, deuxième, troisième, quatrième, cinquième, sixième et septième électrovalves (S1, S2, S3, S4, S5, S6, S7) ;
- un premier élément à friction (34) activé en commun pour chaque rapport de transmission ;
- des deuxième, troisième, quatrième, cinquième, sixième, septième, huitième et neuvième éléments à friction (48, 56, 58, 60, 68, 70, 74, 76), dont au moins un est activé en fonction des rapports de transmission ;
- une valve de régulateur de contrôle de couple (22), pour fournir la pression de couple nécessaire pour activer les éléments de friction (48, 56, 58, 60, 68, 70, 74, 76),
- une valve manuelle (30) ;
- des valves de commutation de rapports de transmission, premier vers deuxième, deuxième vers troisième, troisième vers quatrième, et quatrième vers cinquième (36, 40, 42, 44), pour fournir sélectivement de la pression hydraulique aux éléments à friction selon les fonctionnements EXCITE/DESEXCITE des électrovalves, afin de commuter les rapports de transmissions ; et
- des deuxième et troisième valves d'embrayage de rapport de transmission (50, 62), une quatrième valve à bande (64) et une valve d'unité de surmultipliée (72) commandée par la pression de couple, pour fournir une pression d'actionnement aux éléments à friction (48, 56, 58, 60, 68, 70, 74, 76) des étages respectifs de rapports de transmission et fournir la pression d'activation des rapports de transmission suivants aux valves de changement de rapport de transmission (36, 40, 42, 44), dans laquelle la valve manuelle (30) fournit la pression de circuit régulée par la valve de régulation de pression (6) en fonction de la position d'un levier de vitesse ou de rapports de transmission, à la valve de régulateur de contrôle de couple (22), aux valves d'embrayage et à la valve à bande, ou bien aux premier et sixième éléments à friction ;
caractérisée en ce que
- lesdites valves de passage de premier à deuxième, deuxième à troisième, troisième à quatrième et quatrième à cinquième rapports de transmission (36, 40, 42, 44) sont commandées par les fonctionnements EXCITE/DESEXCITE desdites première, deuxième, troisième et quatrième électrovalves (S1, S2, S3 et S4), afin de fournir sélectivement la pression de couple fournie depuis la valve de régulateur de contrôle de couple (22), premièrement aux éléments à friction pour le changement de rapports et, ensuite, la pression de marche, régulée par les valves de régulation de pression (6) et fournie depuis la valve manuelle (30) pour maintenir le rapport de transmission engagé.

2. La transmission automatique selon la revendication 1, caractérisée en ce que le huitième élément à friction est un élément à friction inverse (74) relié à la valve manuelle (30) via un conduit de pression inverse (77) directement afin d'en recevoir de la pression hydraulique.

3. La transmission automatique selon la revendication 1, caractérisée en ce qu'une valve de blocage d'embrayage en sens inverse (26), pour empêcher le véhicule d'être propulsé en marche arrière lorsqu'un rapport de transmission de marche arrière est sélectionnée dans une gamme "de route", afin d'obstruer l'alimentation de pression hydraulique au neuvième élément à friction (76), est disposée dans un conduit à pression inverse (77) par lequel de la pression hydraulique est fournie au huitième élément à friction (74) pour assurer des moyens de sécurité d'urgence.

4. La transmission automatique selon la revendication 1, caractérisée en ce que la valve de régulateur de contrôle de couple (22) comprend :
- une chambre de pression (220) pour recevoir une pression hydraulique contrôlée par la septième électrovalve (S7) ;
- un premier tiroir (232) pour couper sélectivement la pression de couple fournie à la première valve de passage de premier à deuxième rapport de transmission (36) ; un deuxième tiroir (234) auquel la pression régnant dans la chambre de pression (220) est appliquée ; un premier organe élastique (242) pour solliciter le premier tiroir (232) ; et
- un deuxième organe élastique (244) disposé entre le premier tiroir (232) et le deuxième tiroir (234) pour supporter les premier et deuxième tiroirs élastiquement, ledit deuxième organe élastique (244) exerçant une force élastique supérieure à celle du premier organe élastique (242).

5. La transmission automatique selon la revendication 1, caractérisée en ce que la valve de changement ou de commutation (36) du premier vers le deuxième rapport de transmission (36) comprend :
- des premier et deuxième orifices (252, 254) pour recevoir une pression de commande depuis la valve (40) de changement du deuxième vers le troisième rapport de transmission ;
- un troisième orifice (256), pour recevoir la pression de couple depuis un conduit de pression de couple (38) ;
- un quatrième orifice (260), pour recevoir la pression de commande depuis la deuxième valve d'embrayage (50);
- un cinquième orifice (264), pour transmettre la pression de couple à la valve de changement du deuxième vers le troisième rapport de transmission (40) ;
- un sixième orifice (266). pour transmettre la pression de couple ou une pression de commande à la deuxième valve d'embrayage (50), sélectivement; et
- un tiroir (268), pour ouvrir ou fermer les orifices en fonction de la variation de la pression dans une chambre de pression contrôlée par la première électrovalve (S1).

6. La transmission automatique selon la revendication 1, caractérisée en ce que la valve de changement du deuxième au troisième rapport de transmission (40) comprend :
- des premier et deuxième orifices (282, 284) reliés à des conduits de branchement (278, 280) d'un conduit de commande (24);
- Un troisième orilice (286) pour recevoir la pression de couple depuis la valve de changement de premier à deuxième rapport de transmission (36);
- un quatrième orifice (290) pour recevoir la pression de commande depuis la troisième valve d'embrayage (62);
- un cinquième orifice (292) pour transmettre la pression de couple à la valve de changement de troisième à quatrième rapport de transmission (40) ;
- un sixième orifice (296) pour transmettre la pression de couple ou la pression de commande à une troisième valve d'embrayage (62), sélectivement ;
- un septième orifice (298) pour transmettre la pression de commande à la valve de changement de premier à deuxième rapport de transmission (36) ; et
- une tiroir (268) pour ouvrir ou fermer les orifices en fonction de la variation de la pression dans une chambre de pression, commandée par la deuxième électrovalve (S2).

7. La transmission automatique selon la revendication 1, caractérisée en ce que la valve de changement de troisième à quatrième rapport de transmission (42) comprend :
- des premier et deuxième orifices (314, 316) reliés aux conduits de ramification (310, 312) du conduit de contrôle (24);
- un troisième orifice (318) pour recevoir la pression de couple depuis la valve de passage de deuxième à troisième rapport de transmission (40);
- un quatrième orifice (322) pour recevoir la pression de commande issue de la quatrième valve de bande (64) ;
- un cinquième orifice (326) pour transmettre la pression de couple à la valve passage de troisième à cinquième rapport de transmission (44);
- un sixième orifice (328) pour transmettre la pression de couple ou la pression de commande à la quatrième valve à bande (64) ;
- un septième orifice (326) pour transmettre la pression de commande à la valve de passage de quatrième à cinquième rapport de transmission ; et
- un tiroir (336) pour ouvrir ou fermer les orifices en fonction de la variation de la pression dans une chambre de pression, commandée par la troisième électrovalve (S3).

8. La transmission automatique selon la revendication 1, caractérisée en ce que la valve de passage de quatrième à cinquième rapport de transmission (44) comprend :
- des premier et deuxième orifices (348, 350) connectés aux conduits de ramification (344, 346) du conduit de commande (330);
- un troisième orifice (352) pour recevoir la pression de couple de la valve de passage de troisième à quatrième rapport de transmission (42);
- un quatrième orifice (356) pour recevoir la pression de commande depuis la valve d'unité de surmultipliée (72);
- un cinquième orifice (358) pour transmettre la pression de couple ou la pression de commande à la valve d'unité de surmultipliée (72); et
- un tiroir (446) pour ouvrir ou fermer les orifices en fonction de la variation de pression dans une chambre de pression commandée par la quatrième électrovalve (S4).

9. La transmission automatique selon la revendication 1. caractérisée en ce que la valve manuelle (30) a des modes concernant les sélections "P", "R", "N", "D", "3", "2" et "1," pour les rapports de transmission.

10. La transmission automatique selon la revendication 9, caractérisée en ce que la valve manuelle (30) peut être commutée manuellement aux sélections "D", "3", "2" et "1," pour les rapports de transmission.

11. La transmission automatique selon la revendication 10, caractérisée en ce que la pression de commande est fournie aux premier et sixième éléments de friction, directement, pour un premier rapport de transmission de la sélection "D".

12. La transmission automatique selon la revendication 10, caractérisée en ce que la première électrovalve (S1), destinée à commander la valve de changement de premier à deuxième rapport de transmission (36), est commandée à l'état DESEXCITE pour fournir la pression de commande aux éléments de friction qui sont activés à un premier niveau de rapport de transmission et à un deuxième élément de friction (48) à un deuxième niveau de rapport de transmission de la sélection "D".

13. La transmission automatique selon la revendication 10, caractérisée en ce que la deuxième électrovalve (S2) pour commander la valve de changement de deuxième à troisième rapport de transmission (40) est commandée à l'état DESEXCITE, pour fournir la pression de commande aux éléments de friction qui sont activés à un deuxième niveau de rapport de transmission et à un troisième élément de friction (56) à un troisième rapport de transmission de la sélection "D".

14. La transmission automatique selon la revendication 10, caractérisée en ce que la troisième électrovalve (S3), pour commander la valve de changement de troisième à quatrième rapport de transmission (42) est commandée à l'état DESEXCITE, pour fournir la pression de commande aux éléments de friction qui sont activés à un troisième niveau de rapport de transmission, et à un quatrième élément de friction (58) à un quatrième rapport de transmission de la sélection "D".

15. La transmission automatique selon la revendication 10, caractérisée en ce que la quatrième électrovalve (S4) devant commander la valve de changement de quatrième à cinquième rapport de transmission (44) est commandée à l'état DESEXCITE, pour couper la pression hydraulique fournie au sixième de élément à friction (68) et pour fournir la pression de commande aux éléments à friction qui sont activés à un quatrième niveau de rapport de transmission et à un septième élément de friction (70) à un cinquième rapport de transmission de la sélection "D".

16. La transmission automatique selon la revendication 10, caractérisée en ce que les première et deuxième électrovalves (S1, S2) sont commandées aux états DESEXCITE, et les troisième et quatrième électrovalves (S3, S4) sont commandées aux états EXCITE pour permettre un saut de commutation de troisième à quatrième rapport de transmission, à la sélection "D".

17. La transmission automatique selon la revendication 11, caractérisée en ce que la première électrovalve (S1) est commandée à l'état DESEXCITE et les deuxième, troisième et quatrième électrovalves (S1, S2, S3) sont commandées aux états EXCITE, pour permettre un saut de commutation de deuxième à cinquième rapport de transmission, à la sélection "D".

18. La transmission automatique selon la revendication 10, caractérisée en ce que les première et quatrième électrovalves (S1, S4) sont commandées aux états DESEXCITE, et les deuxième et troisième électrovalves sont commandées aux états EXCITE pour permettre un saut de commutation de deuxième à quatrième rapport de transmission à la sélection "D".

19. La transmission automatique selon la revendication 11, caractérisée en ce que les première, deuxième, troisième et quatrième électrovalves (S1, S2, S3, S4) sont commandées aux états EXCITE pour permettre un saut de commutation de premier à cinquième rapport de transmission à la sélection "D".

20. La transmission automatique selon la revendication 10, caractérisée en ce que les première, deuxième et troisième électrovalves (S1, S2, S3) sont commandées aux états EXCITE, et la quatrième électrovalve est commandée à l'état DESEXCITE pour permettre un saut de commutation du premier au quatrième rapport de transmission, à la sélection "D".

21. La transmission automatique selon la revendication 11, caractérisée en ce que les première et deuxième électrovalves sont commandées aux états EXCITE et les troisième et quatrième électrovalves (S3, S4) sont commandées aux états DESEXCITE pour permettre un saut de commutation du premier au troisième rapport de transmission à la sélection "D".

22. La transmission automatique selon la revendication 1, caractérisée en ce que l'électrovalve d'alimentation (18) a un tiroir (200). un organe élastique (202) pour solliciter le tiroir (200), afin de réguler la pression hydraulique fournie depuis l'électrovalve d'alimentation (18), et une vis (206) pour comprimer ou relâcher l'organe élastique (202).
